(19) Europäisches Patentamt
European Patent Office
Office européen des brevets

(11) EP 1 046 667 A2

(12) # EUROPEAN PATENT APPLICATION

(43) Date of publication:
**25.10.2000 Bulletin 2000/43**

(51) Int. Cl.[7]: **C08J 7/04**, C09D 7/12

(21) Application number: **00108019.1**

(22) Date of filing: **19.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.04.1999 JP 11291899**

(71) Applicant:
**Daikin Industries, Ltd.**
**Osaka-shi Osaka 530-8323 (JP)**

(72) Inventor:
**Chida, Akira,**
**Yodogawa-seisakusho**
**Settsu-shi, Osaka 566-8585 (JP)**

(74) Representative: **HOFFMANN - EITLE**
**Patent- und Rechtsanwälte**
**Arabellastrasse 4**
**81925 München (DE)**

(54) **Plastic molded article coated with surface-hydrophilizing coating composition**

(57) To provide a plastic molded article which is excellent in stain-removable property, water-draining property, anti-haze property, dewing-preventing property, anti-static property and biocompatibility and has a coating film of hydrophilizing coating composition containing an organometallic compound having a hydrolyzable leaving group, its oligomer and/or cooligomer comprising two or more of the organometallic compounds on at least one outermost layer of a plastic substrate.

EP 1 046 667 A2

## Description

The present invention relates to a plastic molded article having a coating film of hydrophilizing coating composition at least on one outermost layer thereof. Particularly the present invention relates to a plastic molded article which is capable of being in the form of film, sheet, board, tube, etc. and is excellent in stain-removable property, water-draining property, anti-haze property, dewing-preventing property and anti-static property, and also in biocompatibility.

Hitherto it has been considered that adherence of staining substances can be inhibited by making surfaces of various substrates hydrophobic (water repellence) and thus appearance thereof is maintained for a long period of time. According to that way of thinking, surface treatment and coating as mentioned below have been made by using a fluorine-containing resin excellent in hydrophobic property (water repellency).

(1) A method of adhering a fluorine-containing resin film to a substrate by thermo-compression (JP-A-8-132571, JP-A-6-155670)
(2) A method of coating a two-liquid curing type fluorine-containing resin composition containing an acrylic polymer as a stain-proofing coating agent to a substrate (JP-A-3-275860, JP-A-2-299838, JP-A-2-299839)
(3) A method of coating a heat-melting vinylidene fluoride type fluorine-containing resin composition to a substrate (JP-A-7-3220, JP-A-6-287334, JP-A-2-274534)

In those surface treatments (1) to (3), as a fluorine-containing resin, highly hydrophobic fluorine-containing resins such as tetrafluoroethylene/ ethylene copolymer and vinylidene fluoride polymer are used to make a surface of a final product highly hydrophobic.

However it has been known from recent researches that staining substances such as exhaust gases released from automobiles and factories are inherently hydrophobic (lipophilic) substances and those lipophilic staining substances are easily adhered to a hydrophobic surface. Therefore the above-mentioned surface treating methods cannot prevent adherence of lipophilic staining substances while there is only a merit that such staining substances are easily removed by wiping with a cloth, etc.

JP-A-8-150681 discloses a trial to make a surface of an outdoor article hydrophilic by coating a hydrophilic colloid to one surface of a plastic film and adhering another surface thereof to the article with an adhesive. However in that method, a formed hydrophilic surface layer is comparatively thin, and a stain-proofing ability and stain-removable property cannot be maintained for a long period of time.

Similar problems are seen in case of products used in a damp site, for example, a sink of systemized kitchen unit, washstand, bath tub and drain pipe. In case of those products used in damp site, in many cases, staining substances on them are washed off with water by using a detergent or without using a detergent. However when a surface thereof is hydrophobic, water-draining property is lowered, water on the surface remains as a droplet, and organic substances in the droplet adhere as a fur in the form of line or spot. Such a fur not only lower appearance but also result in a slime due to the propagation of bacteria. Those problems with draining around a damp site is also seen in various drain pipes.

Also there are many cases where hazing occurs on surfaces of various products due to moisture caused by sudden change in temperature and humidity, and in some cases, prevention of such hazing is demanded strongly. For example, hard vinyl chloride resin, polycarbonate resin and acrylic resin boards which are excellent in transparency are used on a greenhouse, roof of carport and window of building. Also for houses for agriculture in which sunlight has to be taken sufficiently, a film or sheet of soft vinyl chloride resin, polyolefin resin, polyester resin or fluorine-containing resin which is excellent in transparency is used. Further in cases of various glasses, goggle, helmet shield and window of aircraft, hazing thereof may result in a danger of life.

In order to prevent hazing of those board, sheet and film requiring transparency, there were proposed (1) a method of forming a resin mixture prepared by mixing a hydrophilic resin binder such as polymethyl methacrylate or polyvinyl pyrolidone with an inorganic substance such as colloidal silica or alumina sol, into a board or film, (2) a method of forming an anti-haze surface layer by coating an anti-haze agent comprising an un-modified polyvinyl alcohol and an inorganic substance such as colloidal silica or sodium silicate (JP-A-53-39347, JP-A-55-99987, JP-A-57-73059) and (3) a method of forming an anti-haze surface layer by coating an anti-haze agent comprising a modified polyvinyl alcohol having a silyl group and ionic hydrophilic group in its molecule and an inorganic substance mainly to a glass plate or polyester film (JP-A-59-179685).

However in the method (1), anti-haze property when hazing starts (initial anti-haze property) is poor, and in the method (2), there are problems that wettability to water is insufficient and a surface hardness of an anti-haze agent layer which absorbed moisture is lowered and a flaw by scratching easily occurs. In the method (3), since an anti-haze agent layer is adhered to a polyester substrate with an adhesive, there is a case where peeling of the anti-haze agent layer arises depending on kind of adhesive layer and in addition, a complicated production process is required and cost is high.

If the problem with hazing due to moisture advances further, it results in dewing. The dewing makes windows in the building, fixtures in a room and wall damp, which causes generation of fungi and a patch of damp. In agriculture, droplets caused by dewing fall on plants and in some cases, bring about a damage on them. In cases of goggle and helmet shield, droplets caused by dewing are frozen and partially function as a lens to distort a field of view in some cases. Further the problem with dewing also arises particularly in case of products in which transparency is not demanded, such as a refrigerator, freezer and display cases for freezing and refrigerating.

Besides the above-mentioned chemical properties of a surface, one of the causes for adherence of staining substances is electrical properties thereof. In other words, since plastics have in general a surface resistance of as high as not less than $10^{14}$ Ω/in$^2$, they are electrostatically charged easily. Also if plastics are once charged, it is difficult to eliminate charging thereof Therefore in many cases, plastic products electrostatically attract dusts on a charged surface thereof and thus the dusts are adhered to the surface. The adherence of dusts not only lowers appearance but also causes disorder or malfunction of precise apparatuses and electric and electronic appliances.

As one of methods for giving a static charging preventing ability to a surface of plastic product, there is a method of forming an electrically conductive layer on a surface of plastic product by making the surface hydrophilic and letting them to adsorb moisture in the ambient air. In that method, there were proposed (1) a method of simply coating a surfactant, (2) a method of kneading a low molecular weight surfactant in a resin forming a layer and bleeding the surfactant on the surface after forming a layer, and (3) a method of mixing an ionic conductive resin and forming an ionic conductive phase on a surface when forming a layer (or when molding a product).

However in the method (1), since a surfactant is only coated on a surface, durability is poor. In the method (2), since bleeding of a surfactant advances as time elapses, though a relatively desired effect is obtained in case of polyethylene, polypropylene and soft vinyl chloride resin which are low in a glass transition temperature, intended bleeding does not arise in case of polystyrene, polymethyl methacrylate, hard vinyl chloride resin and polyester which are high in a glass transition temperature. Also even in case of resins which are low in a glass transition temperature, there remain un-solved problems with tacking by a surfactant bleeding on a surface, acceleration of adherence of staining substances from the outside and lowering of weather resistance (for example, coloring, decrease in strength, etc.). On the other hand, in the method (3), since an ionic conductive resin is kneaded together, surface conductivity can be maintained. However in order to attain a desired ability of preventing electrostatic charging, an expensive ionic conductive resin has to be blended in an amount of 20 to 30 %, which makes cost high and gives a big effect on mechanical strength of a molded article.

Even in the fields other than those mentioned above, there is a field where hydrophilization of a surface of plastic product is demanded. For example, there is a field of artificial biomedical materials to be transplanted in vivo such as artificial blood vessel, artificial bone and artificial heart valve.

In the field of artificial biomedical materials, at an initial stage of development thereof, materials inactive to tissues in vivo had been studied, but in recent years, a method of making plastic materials which are in vivo xenobiotic compatible with tissues in vivo is regarded as preferable, in other words, materials being excellent in biocompatibility are regarded as preferable. Thus development by such a method has been proceeded with. For example, in case of artificial blood vessel, tubes of polyester and polytetrafluoroethylene which are assumed to be inert to tissues in vivo are used, but use of them is limited to blood vessels having a diameter of as large as not less than 10 mm or by-pass blood vessels. In case of blood vessels having a small diameter (not more than 6 mm), development of hybrid artificial blood vessel in which epidermic cells in blood vessel having an anti-thrombogenic function are used are proceeded with. In order to make such epidermic cells compatible with artificial blood vessel, it is necessary to make a surface of artificial blood vessel hydrophilic.

Also when a surface of plastic material such as artificial blood vessel is made hydrophilic and covered with a moisture layer, it can be considered that there are functions of getting proteins in vivo not to directly contact the plastic material and inhibiting rejection in vivo such as adsorption of proteins.

Example of a proposed method of making a surface of plastic material hydrophilic in biomedical materials is a method of introducing (copolymerizing) a hydrophilic group such as carboxyl, amido or hydroxyl into a resin to make the resin itself hydrophilic.

However there is a limit in an amount of hydrophilic groups which can be introduced in that method, and it is difficult to attain an intended high biocompatibility.

Also there have been proposed a method of modifying (activating) a surface of plastic material by corona discharge treatment, plasma discharge treatment, high energy ray (ultraviolet ray, electron beam, radioactive ray, etc.) treatment, or the like, a method of introducing a hydrophilic compound by grafting, and the like method.

However in those method, highly costing facilities are required and in addition, there are problems to be solved such as a limited depth of modified surface, etc.

An object of the present invention is to provide a plastic material having a surface made hydrophilic and giving various functions such as stain-removable property, water-draining property, anti-haze property, dewing-preventing property, anti-static property, and biocompatibility.

Further an object of the present invention is to provide various plastic products or articles which are produced by using a plastic molded article having a hydrophilized surface.

Namely the present invention relates to a plastic molded article having a coating film of hydrophilizing coating composition containing an organometallic compound having a hydrolyzable leaving group, its oligomer and/or cooligomer comprising two or more of the organometallic compounds on at least one outermost layer of a plastic substrate.

The preferred organometallic compound is an organometallic compound represented by the formula (1):

$$X_bM(OR^1)_aR^2_c \quad (1)$$

wherein a is 0 or an integer of 1 to 6, b is 0 or an integer of 1 to 5, c is 0 or an integer of 1 to 6, provided that $a + b + c \geqq 3$ and a and c are not zero at the same time, X are the same or different and each is hydrogen atom or an organic group which has 1 to 5,000 carbon atoms and may contain oxygen atom, nitrogen atom, fluorine atom and/or chlorine atom, M is a metal atom having at least three valences, $R^1$ are the same or different and each is siloxane residue, hydrogen atom or an organic group which has 1 to 1,000 carbon atoms and may contain oxygen atom, nitrogen atom, fluorine atom and/or chlorine atom, $R^2$ are the same or different and each is an organic group which has 1 to 20 carbon atoms, has a chelating ability and may contain oxygen atom, nitrogen atom, fluorine atom and/or chlorine atom. Particularly preferred are fluorine-containing organometallic compounds in which at least one of $R^1$ and $R^2$ is a fluorine-containing group.

Further it is preferable that the plastic substrate is in the form of film, sheet, board or tube and produced from polyethylene, polypropylene, polystyrene, ethylene / vinyl acetate copolymer, polyvinyl chloride, a resin mixture of polyvinylidene fluoride/polyvinyl chloride, polyvinyl alcohol, polytetrafluoroethylene, tetrafluoroethylene /hexafluoropropylene copolymer, tetrafluoroethylene/perfluoro(alkyl vinyl ether) copolymer, ethylene/tetrafluoroethylene copolymer, ethylene/chlorotrifluoroethylene copolmer, polychlorotrifluoroethylene, polyvinylidene fluoride, polyvinyl fluoride, polycarbonate, cellulose acetate, cellulose triacetate, polyester, polyethylene naphthalate, polyvinyl butyral, polyamide 6, polyamide 12, wholly aromatic polyamide, polyimide, polyamideimide, polysulfone, polyether sulfone, polyphenylene sulfide, polyarylate, polyether ether ketone or polyetherimide.

From the viewpoint of good weather resistance and being less affected by a plasticizer, a substrate of polyolefin such as polyethylene, polypropylene, ethylene/vinyl acetate copolymer or the like is preferred.

It is preferable that the above-mentioned surface-hydrophilizing coating composition contains an ultraviolet ray absorber, silane coupling agent or a hydrolyzing catalist for hydrophilization in addition to the above-mentioned organometallic compound and resin for paint.

Further it is preferable that a coating film of the above-mentioned hydrophilizing coating composition is subjected to treatment for accelerating hydrophilization.

In case of use of the plastic molded article by adhering to other product or article, it is preferable that an adhesive layer is provided on another surface of the plastic substrate where the coating film of the above-mentioned hydrophilizing coating composition is not formed.

The present invention also relates to a method of producing a plastic molded article hydrophilized by coating a plastic substrate with a hydrophilizing coating composition containing an organometallic compound having a hydrolyzable leaving group, its oligomer and/or cooligomer comprising two or more of the organometallic compound.

Also the present invention relates to products produced from the above-mentioned plastic molded article and having good biocompatibility, stain-removable property, anti-haze property, anti-static property, water-draining property and dewing-preventing property, and further relates to a film or sheet for agriculture, covering film or sheet for solar cell, film or sheet for outdoor use, film or sheet for building materials, particularly a cloth for tent having the above-mentioned film or sheet for outdoor use on its surface and a protection cloth for building having the above-mentioned film or sheet for building materials, laminated steel plates, plate materials for outdoor use (for example, advertising panel, sound-proof panel, wall panel, etc.), wall paper and the like which are produced from the above-mentioned plastic molded article.

The hydrophilizing coating composition which is used in the present invention for hydrophilizing a surface of a plastic substrate contains an organometallic compound having a hydrolyzable leaving group, its oligomer and/or cooligomer comprising two or more of the organometallic compounds.

Examples of preferred organometallic compound are compounds represented by the above-mentioned formula (1). Those organometallic compound, its oligomer and/or cooligomer comprising two or more of the organometallic compounds are those described in WO 97/11130 publication. It is to be noted that in the present invention, it is possible to use the organometallic compounds excluded in that publication and represented by the formula (2):

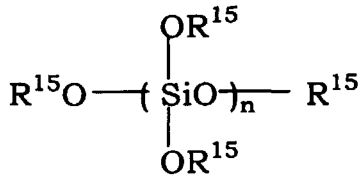

(2)

wherein n is an integer of 1 to 20, all of $R^{15}$ are different or at least two of $R^{15}$ are the same, each is a monovalent organic group which has 1 to 1,000 carbon atoms and may contain oxygen atom, nitrogen atom and/or silicon atom and a part or the whole of hydrogen atoms of said organic group may be substituted by fluorine atom or fluorine atom and chlorine atom.

Those organometallic compounds have a function to make a surface of coating film hydrophilic, and more preferable substituent and molecular weight may be selected and used depending on desired functions and applications.

At first explained below is an embodiment of the organmetallic compound represented by the formula (1), which is suitable from overall point of view.

The above-mentioned a is 0 or an integer of 1 to 6 from the viewpoint of surface concentrating property, hydrolyzability and releasing property, and is preferably an integer of 2 to 4.

The above-mentioned b is 0 or an integer of 1 to 5 from the viewpoint of surface concentrating property and hydrophilic property, and is preferably 0 or 1.

The above-mentioned c is 0 or an integer of 1 to 6 from the viewpoint of surface concentrating property, hydrolyzability and releasing property, and is preferably 0 or an integer of 1 to 3.

A total amount of a, b and c is decided based on valence of the metal atom M. In the formula (1), since either of $OR^1$ or $R^2$ is necessary for stain-proofing property, surface concentrating property and hydrolyzability, there is no case where both of a and c are zero at the same time, and the total amount of a, b and c is at least 3.

The above X may be hydrogen atom and is preferably a monovalent organic group of, for example, the following (1) to (3) which has 1 to 5,000 carbon atoms and may contain oxygen atom, nitrogen atom, fluorine atom and/or chlorine atom.

(1) As the organic group X, there are, for example, $H(CH_2)_p$, $(CH_3)_2CH$, $H(CH_2)_pC{=}0$, $F(CF_2)_q(CH_2)_p$, $(CF_3)_2CH$ and $H(CF_2)_q(CH_2)_p$, and the like, wherein p is 0 or an integer of 1 to 6, q is an integer of 1 to 10, a part of fluorine atoms may be substituted by chlorine atoms. Those organic groups may be linear or branched.

Examples thereof are, for instance, $CH_3$, $CH_3CH_2$, $CH_3CH_2CH_2$, $(CH_3)_2CH$, $CF_3CH_2$, $CF_3CF_2CH_2$, $(CF_3)_2CH$, $F(CF_2)_4CH_2CH_2$, $F(CF_2)_8CH_2CH_2$, $H(CF_2)_4CH_2$, and the like. From the viewpoint of surface concentrating property, hydrolyzability and releasing property, $CF_3CF_2CH_2$ and $(CF_3)_2CH$ are preferable.

(2) Also as the organic group X, there are, for example, organic groups having a functional group such as $NH_2$, secondary amine, tertiary amine, OH, NCO, $CO_2H$, $CO_2Na$, $CO_2K$, $SO_3H$, $SO_2Na$, $SO_3K$, epoxy group and oxyethylene group ($CH_2CH_2O$), and the like.

Examples thereof are, for instance, $H_2N(CH_2)_3$, $OCN(CH_2)_3$, $CH_3O(CH_2CH_2O)(CH_2)_3$, $CH_3O(CH_2CH_2O)_5(CH_2)_3$, $CH_3O(CH_2CH_2O)_{10}(CH_2)_3$,

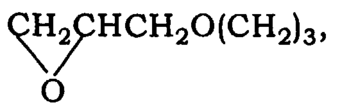

and the like. From the viewpoint of hydrophilic property, compatibility and adhesion, $OCN(CH_2)_3$ and $CH_3O(CH_2CH_2O)_5(CH_2)_3$ are preferable.

(3) Further as the organic group X, there are, for example, polymerizable organic groups which may contain oxygen atom, nitrogen atom, fluorine atom, chlorine atom, silicon atom, or the like.

Examples thereof are, for instance, $CH_2{=}C(CH_3)CO_2(CH_2)_3$, $CH_2{=}CH$, $CH_2{=}CHCH_2$, $CH_2{=}CHO(CH_2)_3$, $CH_2{=}CHOCO(CH_2)_3$, $CH_2{=}CHC_6H_4$, $CH_2{=}CHCO_2(CH_2)_3$ and the like. From the viewpoint of polymerizability and availability, $CH_2{=}C(CH_3)CO_2(CH_2)_3$ and $CH_2{=}CHO(CH_2)_3$ are preferable.

In the present invention, polymers or copolymers which have a molecular weight of 2,000 to 200,000, preferably 5,000 to 20,000 and are prepared by polymerizing or copolymerizing the compounds represented by the formula (1) which have the polymerizable organic group as mentioned above, are also preferable.

The above $R^1$ are the same or different, and each may contain oxygen atom, nitrogen atom, fluorine atom and/or chlorine atom. From the viewpoint of surface concentrating property, hydrolyzability and releasing property $R^1$ is hydrogen atom, a siloxane residue or a monovalent organic group having 1 to 1,000 carbon atoms, and the number of carbon atoms is preferably from 1 to 100, more preferably from 1 to 16.

Among the $R^1$, examples of the preferred monovalent organic group are, for instance, $H(CH_2)_m$, $(CH_3)_2CH$, $H(CH_2)_mC{=}O$, $F(CF_2)_n(CH_2)_m$, $(CF_3)_2CH$, $H(CF_2)_n(CH_2)_m$, $F(CF_2)_n(CH_2)_mC{=}O$, $H(CF_2)_n(CH_2)_mC{=}O$, $(F(CF_2)_n(CH_2)_m)_2N$, $((CF_3)_2CH)_2N$, $(H(CF_2)_n(CH_2)_m)_2N$, $F(CF_2)_nO(CF(CF_3)CF_2O)_mCF(CF_3)C{=}O$, $(F(CF_2)_n(CH_2)_m)_2C{=}N$, $((CF_3)_2CH)_2C{=}N$, $(H(CF_2)_n(CH_2)_m)_2C{=}N$, $F(CF_2)_n(CH_2)_mC{=}ONR^3$, $H(CF_2)_n(CH_2)_mC{=}ONR^3$, $F(CF_2)_n(CH_2)_mC{=}CH_2$, $H(CF_2)_n(CH_2)_mC{=}CH_2$, $F(CF_2)_n(CH_2)_mC{=}CF_2$ and $H(CF_2)_n(CH_2)_mC{=}CF_2$, wherein m is 0 or an integer of 1 to 6, n is an integer of 1 to 10, $R^3$ is alkyl which has 1 to 6 carbon atoms and may be linear or branched.

Examples of those organic groups are, for instance, $CF_3CH_2$, $CF_3CF_2CH_2$, $CF_3(CF_2)_2CH_2$, $CF_3(CF_2)_3CH_2CH_2$, $(CF_3)_2CH$, $CF_3(CF_2)_7CH_2CH_2$, $H(CF_2)_2CH_2$, $H(CF_2)_3CH_2$, $H(CF_2)_4CH_2$, $CF_3C{=}O$, $CF_3CF_2C{=}O$, $CF_3(CF_2)_6C{=}O$, $CF_3(CF_2)_7C{=}O$, and the like. From the viewpoint of surface concentrating property, hydrolyzability and releasing property, $CF_3CH_2$, $CF_3CF_2CH_2$, $CF_3(CF_2)_2CH_2$, $CF_3(CF_2)_3CH_2CH_2$, $CF_3C{=}O$ and $CF_3CF_2C{=}O$ are preferred, and $CF_3CH_2$ and $CF_3CF_2CH_2$ are more preferable.

Among the above $R^1$, examples of the siloxane residue are, for instance, $(Si(OR^1)_2O)_nR^1$, in which $R^1$ is the same as a monovalent organic group among the above-mentioned $R^1$, and the like.

The above $R^2$ may be the same or different and is an organic group which has an excellent chelating ability and may contain fluorine atom and/or chlorine atom. It is preferable that $R^2$ have the number of carbon atoms of 1 to 20, preferably 2 to 10 from the viewpoint of surface concentrating property, hydrolyzability and releasing property.

In the present invention, since the organometallic compound, in which an organic group having such a chelating ability is bonded, is used, there can be obtained effects of excellent storage stability, reactivity, solubility and compatibility.

The organic group having the chelating ability as mentioned above can be derived from compounds as follows: for example, β-diketones such as 2,4-pentanedione and 2,4-heptanedione; keto esters such as methyl acetoacetate, ethyl acetoacetate and butyl acetoacetate; hydroxycarboxylic acids such as lactic acid, methyl lactate, ethyl lactate, ammonium lactate, salicylic acid, methyl salicylate, ethyl salicylate, malic acid, ethyl malate, tartaric acid, ethyl tartrate, an ester and a salt thereof; keto-alcohols such as 4-hydroxy-4-methyl-2-pentanone, 4-hydroxy-2-pentanone, 4-hydroxy-2-heptanone and 4-hydroxy-4-methyl-2 -heptanone; amino-alcohols such as monoethanolamine, diethanolamine, triethanolamine, N-methylmonoethanolamine, N-ethylmonoethanolamine, N,N-dimethylethanolamine and N,N-diethylethanolamine; active hydrogen compounds with enolic form such as diethyl malonate, methylolmelamine, methylolurea and methylolacrylamide; and the like. From the viewpoint of surface concentrating property, more preferable are compounds which are obtained by substituting a part or the whole of hydrogen atoms of the above-mentioned compounds by fluorine atom and/or chlorine atom.

Examples of the above-mentioned metal atom M are, for instance, B, Al, Ga, In, Tl, Sc, Y, La, Ac, Si, Ge, Sn, Pb, Ti, Zr, Hf, As, Sb, Bi, V, Nb, Ta, Te, Po, Cr, Mo, W, At, Mn, Tc, Re, Fe, Co, Ni, Ru, Rh, Pd, Os, Ir, Pt and the like. From the viewpoint of synthesis and availability, Al, Ti, B, Zr or Si is preferable, and Si is particularly preferable.

Examples of the oligomer or cooligomer of the present invention are linear, branched, cyclic and three-dimensional oligomers or cooligomers.

In the present invention, the degree of polymerization of the oligomer or cooligomer is preferably from 2 to 100, more preferably from 4 to 20. When the degree of polymerization is smaller, a boiling point of the oligomer or cooligomer is easily lowered, and the oligomer or cooligomer is easily vaporized at coating and is difficult to be incorporated into a coating film. When the degree of polymerization exceeds 100, there is a tendency that control of the degree of polymerization at synthesis is difficult, a viscosity of the oligomer or cooligomer easily becomes high and workability becomes inferior. When in the formula (1), a is 4, b and c are zero, M is Si and fluorine atom is contained, it is preferable that the degree of polymerization of the oligomer or cooligomer is more than 4 and not more than 30 from the viewpoint of appearance, anti-sagging property and alkali resistance of a coating film.

In the present invention, the hydrophilic coating composition containing the above-mentioned organometallic compound is coated on a plastic substrate to form a hydrophilizing coating film.

The hydrophilizing coating composition comprises (A) any of the above-mentioned organometallic compounds, oligomers and cooligomers; (B) resin for paints; (C) curing agent and/or curing catalyst. The coating film obtained from the composition makes the film surface hydrophilic and exhibits functions of biocompatibility, stain-removable property, anti-haze property, dewing-preventing property, water-draining property, anti-static property, etc.

Examples of (B) the resin for paints are, for instance, a fluoroolefin copolymer having hydroxyl group and/or carboxyl group, acrylic lacquer resin, acrylic polyol resin, acrylic silicon resin, fluorine-containing silicone resin, inorganic material, homopolymer or copolymer of vinylidene fluoride containing no functional group and the like which are solvent-soluble. The fluoroolefin copolymer having hydroxyl group and/or carboxyl group and acrylic polyol resin are preferred from a point that they have been widely used.

In addition to the above resins, a fluorine-containing resin (such as a vinylidene fluoride homopolymer or copolymer disclosed in JP-B-43-10363, JP-A-3-28206 and JP-A-4-189879) which has no functional group can be used. The fluorine-containing resin can be blended in the above-mentioned resins having a functional group. When the resin having no functional group is used, it is not always necessary to use a curing agent and curing catalyst in the coating composition of the present invention.

Examples of the fluoroolefin copolymer having hydroxyl group and/or carboxyl group are, for instance, those disclosed in each of JP-B-60-21686, JP-A-3-121107, JP-A-4-279612, JP-A-4-28707 and JP-A-2-232221. A number average molecular weight of the copolymer (measured by GPC) is from 1,000 to 100,000, preferably 1,500 to 30,000. When the molecular weight is less than 1,000, curability and weather resistance tend to be insufficient, and when more than 100,000, there is a tendency that problems arise with respect to workability and coating procedures.

A hydroxyl value of the copolymer is from 0 to 200 (mgKOH/g), preferably 0 to 150 (mgKOH/g). When the hydroxyl value decreases, there is a tendency that curing failure is easy to occur, and when the hydroxyl value exceeds 200 (mgKOH/g), there is a tendency that problem arises with respect to flexibility of a coating film.

An acid value of the copolymer is from 0 to 200 (mgKOH/g), more preferably 0 to 100 (mgKOH/g). When the acid value decreases, there is a tendency that curing failure is easy to occur, and when the acid value exceeds 200 (mgKOH/g), there is a tendency that problem arises with respect to flexibility of a coating film.

As one of the copolymers, there can be used tetrafluoroethylene copolymer from the viewpoint of stain-proofing property, stain removable property and corrosion resistance.

Examples of the copolymer are those commercially available, for instance, Zeffle (registered trademark) available from DAIKIN INDUSTRIES, LTD., Lumiflon (registered trademark) available from Asahi Glass Kabushiki Kaisha, Cefral Coat (registered trademark) available from Central Glass Kabushiki Kaisha, Fluonate (registered trademark) available from Dai Nippon Ink Kagaku Kogyo Kabushiki Kaisha, Zaflon (registered trademark) available from Toa Gosci Kabushiki Kaisha and the like.

The acrylic polyol resin may be a polymer comprising, for example, a hydroxyl-containing ethylenically unsaturated monomer (a) such as hydroxyl-containing (meth)acrylate, hydroxyvinyl ether and allyl alcohol and an unsaturated monomer (b) having no hydroxyl such as olefins having no hydroxyl, vinyl ether, allyl ether, vinyl ester, propenyl ester, (meth) acrylate, aromatic vinyl compound, (meth) acrylonitrile, carboxyl-containing unsaturated monomer, epoxy-containing unsaturated monomer and amino-containing unsaturated monomer. The acrylic polyol resin may contain hydroxyl, carboxyl, epoxy or amino.

A hydroxyl value of the acrylic polyol resin is from 0 to 200 (mgKOH/g), preferably 0 to 100 (mgKOH/g). When the hydroxyl value decreases, curing failure tends to occur easily, and when the hydroxyl value exceeds 200 (mgKOH/g), there is a tendency that problem arises with respect to flexibility of a coating film.

An acid value of the acrylic polyol resin is from 0 to 200 (mgKOH/g), preferably 0 to 100 (mgKOH/g). When the acid value decreases, curing failure tends to occur easily, and when the acid value exceeds 200 (mgKOH/g), there is a tendency that problem arises with respect to flexibility of a coating film.

Examples of the acrylic lacquer resin are, for instance, resins which are prepared from monomers used for the acrylic polyol resins and have a hydroxyl value of zero and an acid value of from 0 to 10.

As a commercially available acrylic polyol resin and acrylic lacquer resin, there can be used, for example, Dianal (registered trademark) available from Mitsubishi Rayon Kabushiki Kaisha, Acrydic (registered trademark) available from Dai Nippon Ink Kagaku Kogyo Kabushiki Kaisha, Hitaloid (registered trademark) available from Hitachi Kasei Kogyo Kabushiki Kaisha, Olester (registered trademark) available from Mitsui Toatsu Kagaku Kabushiki Kaisha or the like.

The acrylic silicon resin may be one prepared by copolymerizing an acrylic silicon monomer having at least one silane group and a radically polymerizable unsaturated group in its molecule with the above-mentioned hydroxyl-containing ethylenically unsaturated monomer (a) and/ or the above-mentioned unsaturated monomer (b) having no hydroxyl. The acrylic silicon resin may contain a hydrolyzable silyl group, hydroxyl or epoxy.

As a commercially available acrylic silicon resin, there can be used, for example, Gemlac (registered trademark) available from Kaneka Corporation, Kuriyamer (registered trademark) available from Sanyo Kasei Kogyo Kabushiki Kaisha or the like.

In the present invention, as the above-mentioned resin (B) for paints, there can be used inorganic materials such as a non-fluorine-containing metal (Si, Ti, Al, etc.) alkoxide containing non-hydrolyzable group, a non-fluorine-containing organopolysiloxane containing non-hydrolyzable group and a metal (Si, Ti, Al, etc.) alkoxide having no fluorine atom.

As a commercially available inorganic material, there can be used, for example, Ecolton (registered trademark) available from Gunze Sangyo Kabushiki Kaisha, Glaska (registered trademark) available from Nippon Gosei

Rubber Kabushiki Kaisha, Porcelin (registered trademark) available from Tohpe Kabushiki Kaisha, Bell Clean (registered trademark) and Bell Hard (registered trademark) available from Nippon Yushi Kabushiki Kaisha, SH, SR and DC Series available from Toray Dow Coming Silicone Kabushiki Kaisha, KR Series available from Shin-Etsu Kagaku Kogyo Kabushiki Kaisha, Planeact (registered trademark) available from Ajinomoto Kabushiki Kaisha, organotitanate available from Nippon Soda Kabushiki Kaisha, aluminum alcolate and aluminum chelate compound available from Kawaken Fine Chemical Kabushiki Kaisha, zirconium alkoxide available from Hokko Kagaku Kogyo Kabushiki Kaisha, composite modified silicone oil and MMCA available from Nippon Nuicar Kabushiki Kaisha or the like.

Examples of the fluorine-containing silicone resin are, for instance, those disclosed in JP-A-4-279612 and the like.

As the curing agent (C), there is, for instance, isocyanate compound, blocked isocyanate compound, melamine resin, dibasic acid, silane compound containing non-hydrolyzable group, epoxy resin, acid anhydride or the like. From the viewpoint of weather resistance and acid rain resistance, preferable are isocyanate, blocked isocyanate and epoxy resin.

Examples of the isocyanate compound and blocked isocyanate compound are, for instance, 2,4-tolylene diisocyanate, diphenylmethane-4,4'-diisocyanate, xylylene diisocyanate, isophorone diisocyanate, lysine methyl ester diisocyanate, methylcyclohexyl diisocyanate, trimethylhexamethylene diisocyanate, hexamethylene diisocyanate, n-pentane- 1,4-diisocyanate, trimers thereof, adducts and biurets thereof, polymers thereof having at least two isocyanate groups, blocked isocyanates and the like. The isocyanate compound and blocked isocyanate compound are not limited to them.

A mixing ratio of the isocyanate to the resin for paints is preferably from 0.5 to 5.0 in NCO/OH (mole ratio), further preferably 0.8 to 1.2. When the isocyanate is of moisture curing type, 1.1 to 1.5 is preferred.

Non-restricted examples of the melamine resin are, for instance, a melamine resin, a methylolated melamine resin obtained by methylolating melamine, an alkyl-etherified melamine resin obtained through etherification of a methylolated melamine by an alcohol such as methanol, ethanol or butanol, and the like.

Non-restricted examples of the epoxy compound are, for instance,

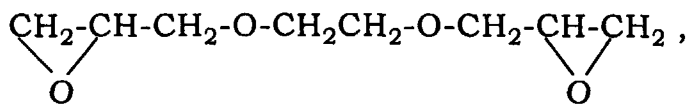

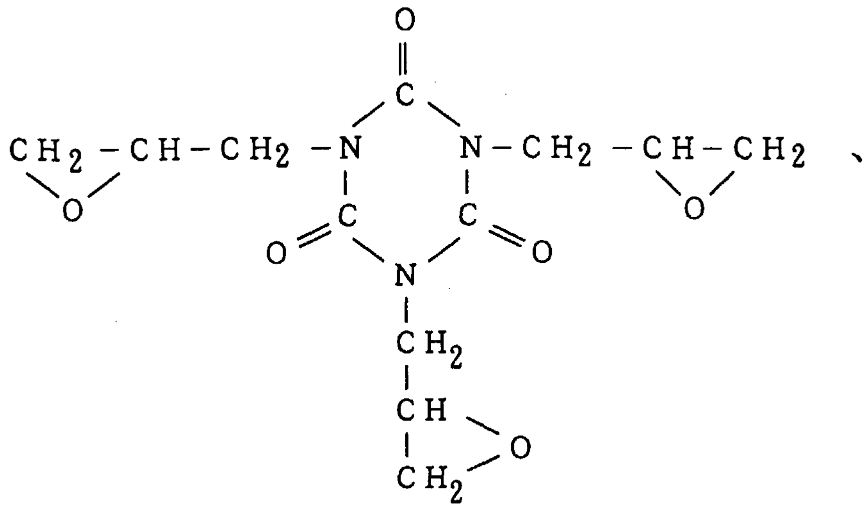

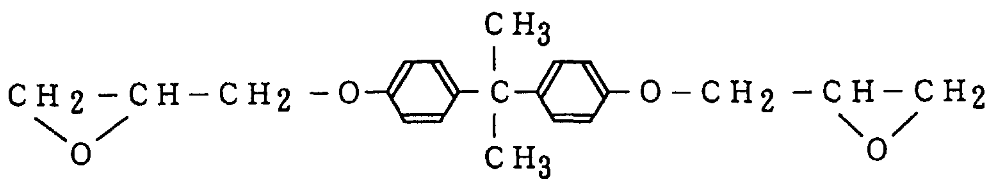

and the like.

Non-restricted examples of the acid anhydride are, for instance, phthalic anhydride, trimellitic anhydride, pyromellitic anhydride, 1,2-cyclohexyldicarboxylic anhydride, succinic anhydride, maleic anhydride and the like.

Dibasic acids such as fumaric acid, succinic acid, adipic acid, azelaic acid, sebacic acid, dodecanedioic acid and 1,2-cyclohexyldicarboxylic acid are also used as the curing agent.

Examples of the curing catalyst (C) are, for instance, organotin compound, organic acidic phosphate, organotitanate compound, reaction product of acidic phosphate and amine, saturated or unsaturated polycarboxylic acid or its acid anhydride, organic sulfonic acid, amine compound, aluminum chelate compound, titanium chelate compound, zirconium chelate compound and the like.

Examples of the organotin compound are, for instance, dibutyltindilaurate, dibutyltinmaleate, dioctyltinmaleate, dibutyltindiacetate and the like.

Examples of the organic acidic phosphate are, for instance,

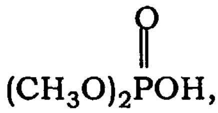, 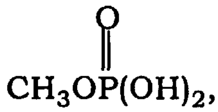, 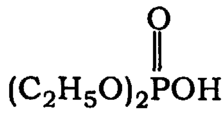,

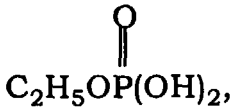, 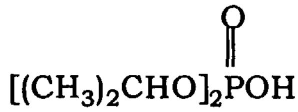

and the like.

Examples of the organotitanate compound are, for instance, titanate such as tetrabutyl titanate, tetraisopropyl titanate or triethanolamine titanate.

Further examples of the amine compound are, for instance, amine compound such as butylamine, octylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl) phenol, morpholine, N-methylmorpholine or 1,8-diazabicyclo(5.4.0)undecene-7 (DBU) and a salt thereof with carboxylic acid; low molecular weight polyamide resin obtained from excess polyamine and polybasic acid; reaction product of excess polyamine and epoxy compound; and the like.

Examples of the chelate compound are, for instance, aluminum tris(ethylacetoacetate), aluminum tris(acetylacetonate), zirconium tetrakis(acetylacetonate), bis (ethylacetoacetate) titanium diisopropoxide and the like.

The curing catalyst may be used alone or in combination of two or more. Preferable curing catalysts are an organotin compound and aluminum chelate compound.

With respect to mixing amount of the resin (B) for paint and the organometallic compound (A), an amount of the organometallic compound is from 0.1 to 50 parts by weight, preferably 1 to 30 parts by weight based on 100 parts by weight of the resin for paints, though it varies depending on purpose and application. When the amount is less than 0.1 part by weight, function of hydrophilization tends to be lowered, and when the amount exceeds 50 parts by weight, there is a tendency that appearance of a coating film becomes poor and compatibility with the resin is lowered.

In the present invention, an organic solvent can be mixed to the above-mentioned composition for paints.

Examples of the organic solvent are, for instance, hydrocarbon solvent such as xylene, toluene, Solvesso 100, Solvesso 150 or hexane; ester solvent such as methyl acetate, ethyl acetate, butyl acetate, ethylene glycol monomethyl acetate, ethylene glycol monoethyl acetate, ethylene glycol monobutyl acetate, diethylene glycol monomethyl acetate, diethylene glycol monoethyl acetate, diethylene glycol monobutyl acetate, ethylene glycol acetate or diethylene glycol acetate; ether solvent such as dimethyl ether, diethyl ether, dibutyl ether, ethylene glycol monomethyl ether, ethylene glycol monoethyl ether, ethylene glycol monobutyl ether, ethylene glycol dimethyl ether, ethylene glycol diethyl ether, ethylene glycol dibutyl ether, diethylene glycol monomethyl ether, diethylene glycol monoethyl ether, diethylene glycol monobutyl ether, diethylene glycol dimethyl ether, diethylene glycol diethyl ether, diethylene glycol dibutyl ether or tetrahydrofuran; ketone solvent such as methyl ethyl ketone, methyl isobutyl ketone or acetone; amide solvent such as N, N-dimethylacetamide, N-methylacetamide, acetamide, N,N-dimethylformamide, N,N-diethylformamide or N-methylformamide; sulfonic acid ester solvent such as dimethylsulfoxide; alcohol solvent such as methanol, ethanol, isopropanol, butanol, ethylene glycol, diethylene glycol, polyethylene glycol (degree of polymerization: 3 to 100), $CF_3CH_2OH$, $F(CF_2)_2CH_2OH$, $(CF_3)_2CHOH$, $F(CF_2)_3CH_2OH$, $F(CF_2)_4C_2H_5OH$, $H(CF_2)_2CH_2OH$, $H(CF_2)_3CH_2OH$ or $H(CF_2)_4CH_2OH$; and the like. From the viewpoint of compatibility, appearance of the coating film and storage stability, preferable are alcohol solvents such as lower alcohol and lower fluorine-containing alcohol.

With respect to a mixing amount of the resin for paints and the alcohol solvent, an amount of the alcohol solvent is from 1 to 50 parts by weight based on 100 parts by weight of the resin for paints, preferably from 1 to 25 parts by weight from the viewpoint of curability and appearance of a coating film.

When the curing agent has high reactivity with alcohol like a room temperature curing type isocyanate, the amount of the alcohol solvent is further preferably from 1 to 15 parts by weight, and the preferred alcohol is a secondary or tertiary alcohol.

To the hydrophilizing coating composition can be added further an ultraviolet ray absorber, silane coupling agent and/or a hydrophilization accelerator.

The addition of ultraviolet ray absorber gives a function of improving protection of under coating and weather resistance to a coating film. Examples of the suitable ultraviolet ray absorber are, for instance, those of benzophenone type, benzotriazole type and cyanoacrylate type. Among them, effective benzophenone type absorbers are 2,2'-dihydroxy-4,4'-dimethoxybenzophenone, 2,2'-dihydroxy-4, -methoxybenzophenone and 2,2',4,4'-tetrahydroxybenzophenone, and effective benzotriazole type absorbers are 2-(2'-hydroxy-5'-methylphenyl) benzotriazole, 2-(2'-hydroxy-5'-methylphenyl) -5,6-dichlorobenzotriazole, 2 -(2'-hydroxy-5'-tert-butylphenyl)benzotriazole, 2-(2'-hydroxy-3',5'-di-tert-butylphenyl)-5-chlorobenzotriazole, 2-(2'-hydroxy-5'-phenylphenyl)-5-chlorobenzotriazole, 2-(2'-hydroxy-3'-tert-butylphenyl)-5-chlorobenzotriazole, 2-(2'-hydroxy-3',5'-di-tert-butylphenyl)benzotriazole and 2-(2'-hydroxy- 5'-tert-octylphenyl)benzotriazole.

Examples of the cyanoacrylate type ultraviolet ray absorber which can be used effectively are, for instance, 2-ethylhexyl-2-cyano-3,3-diphenyl acrylate, ethyl-2-cyano-3,3-diphenyl acrylate, and the like.

Particularly suitable ultraviolet ray absorbers are those represented by the formula:

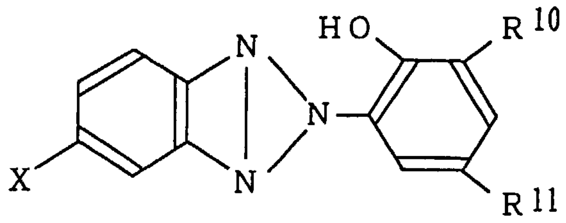

wherein $R^{10}$ and $R^{11}$ are the same or different, and each is hydrogen atom, a lower alkyl group, particularly a branched lower alkyl group or an aryl, particularly phenyl, X is hydrogen atom or a halogen atom, particularly chlorine atom. Also cyanoacrylate type ultraviolet ray absorber is particularly preferable since it is hardly affected by hydrolyzation.

The silane coupling agent gives an adhesive property for recoating to a coating film. Examples of the silane coupling agent are, for instance, methyltrimethoxysilane, ethyltriethoxysilane, dimethyldimethoxysilane, trimethylmethoxysilane, vinyltrimethoxysilane, 3-(glycidyloxy)propyltrimethoxysilane, N-(2-aminoethyl)-3-aminopropyltrimethoxysilane, 3-aminopropyltrimethoxysilane, 3-aminopropyltriethoxysilane, 3-mercaptopropyltrimethoxysilane, 3-trimethoxysilylpropylisocyanate, 3-triethoxysilylpropylisocyanate, methyltris(ethylmethylketoxime)silane and the like. Preferred silane coupling agents are those having an alkylketoxime group or an isocyanate group. Particularly silane coupling agents having an isocyanate group or an epoxy group are preferred from the viewpoint of good recoatability.

In the present invention, addition of a hydrophilization accelerator supports hydrolyzation of an organometallic compound having a high hydrophilizing ability and accelerates hydrophilization of a coating film surface, and further contributes to accelerate curing of a coating film when a resin for paints in the coating composition for paint is of curing type. Examples thereof are those raised in the above-mentioned curing catalyst (C). Preferred are organotin compounds and aluminum chelate compounds from the viewpoint of hydrophilization.

To the coating composition of the present invention can be added additives for paints, for example, pigment, pigment dispersing agent, thickener, leveling agent, anti-foaming agent, auxiliary for film forming, HALS, flatting agent, filler, colloidal silica, anti-fungi agent, anti-skinning agent, antioxidant, flame retardant, anti-drip agent, anti-static agent, rust preventing agent, water soluble resin (polyvinyl alcohol, polyethylene oxide, etc.) and the like.

The above-mentioned hydrophilizing coating composition of the present invention can be used in various manners, for example, in clear finish, in solid form and in blend with filler depending on purposes and applications.

Examples of the above-mentioned plastic substrate are, for instance, those made of vinyl chloride resin, amino resin, soft or hard polyurethane, phenol resin, alkyd resin, polyalkyl ether resin, polyether, polyester, polyolefin, polysulfone, thermoplastic acrylic resin, polyimide, polycarbonate, fluoroolefin resin, cellulose resin, polyamideimide, polyamide, silicone resin, urethane elastomer, polyester elastomer and silicone elastomer and composite substrate thereof with other material. Concretely there are polyethylene, polypropylene, polystyrene, ethylene/vinyl acetate copolymer, polyvinyl chloride, a resin mixture of polyvinylidene chloride/polyvinyl chloride, polyvinyl alcohol, polytetrafluoroehylene, tetrafluoroethylene/hexafluoropropylene copolymer, tetrafluoroehtylene/perfluoro (alkyl vinyl ehter) copolymer, ethylene / tetrafluoroethylene copolymer, ethylene/chlorotrifluoroethylene copolymer, polychlorotrifluoroehtylene, polyvinylidene fluoride, polyvinyl fluoride, polycarbonate, cellulose acetate, cellulose triacetate, polyester, polyethylene naphthalate, polyvinyl butyral, polyamide 6, polyamide 12, wholly aromatic polyamide, polyimide, polyamideimide, polysulfone, polyether sulfone, polyphenylene sulfide, polyarylate, polyether ether ketone and polyetherimide.

Particularly substrates of polyolefin such as polyethylene, polypropylene and ethylene/vinyl acetate copolymer are preferable from the viewpoint of good weather resistance and from a point of being less affected by a plasticizer.

The plastic substrate are in the form of film (thickness: less than 200 µm), sheet (thickness: not less than 200 µm and less than 5 mm), board (which has a thickness of not less than 5 mm and cannot be deformed easily by man power at room temperature), tube and further a jointed article of those materials with a non-plastic material (for example, laminated steel plate). The form of plastic substrate may be selected depending on purpose and application.

With respect to coating method, various coating methods can be employed, for example, spray coating, brush coating, roller coating, curtain flow and dip coating, gravure coating and bar coating, depending on purpose, application and kind of plastic substrate.

When the plastic substrate is in the form of film, sheet or board, coating methods such as a gravure coating method, doctor blade coating method, roll coating method, reverse roll coating method and air knife coating method are employed. In those coating methods, a proper thickness of coating film is from 1 to 20 µm, preferably from 1 to 10 µm from the viewpoint of appearance of coating film and coating procedures. When the substrate is in the form of tube, a dip coating method or the like is employed preferably.

As one example of spray coating methods, there is a method of coating in the form of aerosol obtained by filling the above-mentioned hydrophilizing coating composition in an aerosol can and optionally adding an injection agent thereto. This method makes it possible to carry out coating easily at site and is very convenient when producing a plastic molded article having a hydrophilic surface of the present invention, refinishing or partially repairing.

For example, there is a case where a plastic molded article coated at factory is handled roughly after coating and its surface becomes hydrophobic when arriving at installation site. In such a case, coating or repair coating (touch up) can be carried out easily at site by using a hydrophilizing coating composition filled in an aerosol can. Also when coating is done at narrow site, workability in coating is remarkably excellent as compared with normal coating method.

Further in the present invention, it is preferable to surface-treat a plastic substrate before coating in order to enhance wettability of the coating composition at coating and adhesive property of a coating film. For example, there are corona discharge treatment, plasma treatment, sputtering, excimer laser treatment, and the like. Those surface-treating methods are known methods for activating a surface of plastic substrate.

As another surface-treating method, a primer layer can be provided. A primer layer can be formed by using various known primers. Examples of the primer are, for instance, known lacquer type primer and curing type primer of acrylic resin.

In the so-formed coating film, a surface thereof is hydrophilized since a hydrolyzable group of the orgnometallic compound contained in the coating film is hydrolyzed. This surface hydrophilization is caused by contact of water, for example, rain water, night dew, fog, frost, snow and the like to the coating film.

However in that case, since hydrophilization speed is low at initial stage thereof, it is desirable to accelerate hydrophilization of a coating film previously. Examples of the hydrophilization acceleration treatment are, for instance, pre-treatment for exposing under highly humid atmosphere, treatment for dipping in water and treatment for spraying acid water. These treating methods may be selected depending on purpose and application.

In case where the plastic molded article of the present invention having a hydrophilic coating film is adhered or stuck to a substrate other than plastic, for example, metal, ceramic, natural material (wood, leather) or the like, it is preferable to provide an adhesive layer on a back surface of the plastic molded article where a hydrophilic coating film is not formed.

As the adhesive, there can be used usual epoxy or acrylic adhesives. The adhesives may be selected depending on purpose and application.

Basic constitution of the present invention is as explained above, and the plastic molded article of the present invention having a hydrophilized surface has various functions and can be applied to various applications.

Firstly the plastic molded article is useful as a product having stain-removable property. As mentioned above, various products are susceptible to environmental staining substances such as hydrophilic and hydrophobic staining substances. For example, dusts floating in the air outside and inside of room attach to and deposit on the products, which results in visible staining. In case of building materials and outdoor products, staining substances thereon are washed by rain water, etc. and result in staining in the form of line. Even in case of products used indoor, in addition to dusts, there are staining substances in many places such as oily stains on tableware, ventilation fan, kitchen hood and kitchen table in a kitchen; stain of nicotine on furniture, wall, electric appliance, roll blind, screen, tatami-mat, sofa, table, desk, door, illumination cover, ceiling, carpet and mat in a living room; wax of dirt and soap refuse on bath tub, pail, wall, cover of bath tub, ventilation fan and floor in bath and lavatory; and stains on toilet stool and bowl.

When the plastic molded article of the present invention is used for the above-mentioned products, staining substances thereon can be easily removed by washing, spraying or dipping with a hydrophilic liquid such as water or further by wiping with a cloth or sponge impregnated with a hydrophilic liquid.

When the plastic molded article is used as a product having stain-removable property, non-restricted examples of suitable combinations of components thereof are as follows.

| | |
|---|---|
| (A) Organometallic compound (its oligomer or cooligomer) | 1 to 100 parts |
| Organometallic compound represented by the above-mentioned formula (1), in which at least one of $R^1$ and $R^2$ is a group containing fluorine atom, particularly b is 1 to 5, M is B, Al, Ti, Zr or Si. | |
| (B) Resin for paints | 100 parts |
| Fluoroolefin copolymer having hydroxyl group and/or carboxyl group, acrylic silicon resin, acrylic polyol resin, acrylic lacquer resin, or homopolymer or copolymer of vinylidene fluoride containing no functional group which are solvent-soluble. | |
| (C) Curing agent and/or curing catalyst | 0.001 to 100 parts |
| (D) Hydrolyzing catalyst | 0.001 to 50 parts |
| (E) Solvent | 10 to 2,000 parts |
| (F) Ultraviolet ray absorber | 0.1 to 40 parts |
| (G) Plastic substrate | |
| Any of the above-mentioned plastic substrates and composite substrates thereof. | |

Also the plastic molded article of the present invention is useful as a product having an water-draining property. When the plastic molded article of the present invention having a hydrophilized surface is used, water does not form a mass on the surface and waterdrop does not remain on the surface. Water spreads uniformly over the surface to form a water film. Therefore fur and oily staining substances do not stick in the form of spot and line and can be easily removed only by washing with clean water.

Examples of products requiring water-draining property are, for instance, various pipes, troughs of building and house, water-proof sheet of roof, ceiling of carport, etc. in addition to the above-mentioned bath, lavatory, kitchen and toilet where staining substances are easily deposited.

When the plastic molded article is used as a product having water-draining property, non-restricted examples of suitable combinations of components thereof are as follows.

| | |
|---|---|
| (A) Organometallic compound (its oligomer or cooligomer) | 1 to 100 parts |
| Organometallic compound represented by the above-mentioned formula (1), in which at least one of $R^1$ and $R^2$ is a group containing fluorine atom, particularly b is 1 to 5, M is B, Al, Ti, Zr or Si. | |
| (B) Resin for paints | 100 parts |
| Fluoroolefin copolymer having hydroxyl group and/or carboxyl group, acrylic silicon resin, acrylic polyol resin, acrylic lacquer resin, or homopolymer or copolymer of vinylidene fluoride containing no functional group which are solvent-soluble. | |
| (C) Curing agent and/or curing catalyst | 0.001 to 100 parts |
| (D) Hydrolyzing catalyst | 0.001 to 50 parts |
| (E) Solvent | 10 to 2,000 parts |
| (F) Ultraviolet ray absorber | 0.1 to 40 parts |
| (G) Plastic substrate | |
| Any of the above-mentioned plastic substrates and composite substrates thereof. | |

The plastic molded article of the present invention is also useful as a product having anti-haze property. When the plastic molded article of the present invention having a hydrophilized surface is used, wettability of a hydrophilic surface is enhanced, dewing due to a change in temperature and humidity is difficult to arise and excellent anti-haze property can be exhibited.

Places and products requiring anti-haze property are various windows, display case, mirror, illumination cover and the like which are installed at places where haze is caused by moisture produced due to a difference in temperature; lens, goggle, helmet shield and various covers such as a solar cell cover which require transparency and light transmissivity; various covers, films and sheets for house for agriculture and greenhouse; and the like.

When the plastic molded article is used as a product having anti-haze property, non-restricted examples of suitable combinations of components thereof are as follows.

| | |
|---|---|
| (A) Organometallic compound (its oligomer or cooligomer) | 1 to 100 parts |
| Organometallic compound represented by the above-mentioned formula (1), in which at least one of $R^1$ and $R^2$ is a group containing fluorine atom, particularly b is 1 to 5, M is B, Al, Ti, Zr or Si. | |
| (B) Resin for paints | 100 parts |
| Fluoroolefin copolymer having hydroxyl group and/or carboxyl group, acrylic silicon resin, acrylic polyol resin, acrylic lacquer resin, or homopolymer or copolymer of vinylidene fluoride containing no functional group which are solvent-soluble. | |
| (C) Curing agent and/or curing catalyst | 0.001 to 100 parts |
| (D) Hydrolyzing catalyst | 0.001 to 50 parts |
| (E) Solvent | 10 to 2,000 parts |
| (F) Ultraviolet ray absorber | 0.1 to 40 parts |
| (G) Plastic substrate | |
| Any of the above-mentioned plastic substrates and composite substrates thereof. Particularly various films or sheets (polyester film, fluoroolefin film, polyolefin film, polycarbonate sheet, etc.), hard or soft vinyl chloride sheet, acrylic resin sheet and the like in which one surface or both surfaces are surface-treated. | |

The plastic molded article of the present invention is also useful as a product having a dewing-preventing property. When the plastic molded article having a hydrophilized surface is used, dewdrop caused by moisture in the air outside or inside of room does not appear thereon, and therefore falling of waterdrops does not occur and there is no adverse effect on various products and plants. Further rainwater or splash of water does not remain on the product surface. Also since water droplets are not formed on the surface and a uniform water film is formed on the surface, even if freezing occurs, deviation of view sight can be minimized. Namely a dewing-preventing property used in the present invention is a concept encompassing not only a property of preventing dewing of ambient moisture and formation of waterdrops but also a property of preventing water from remaining on the surface as waterdrops.

Places and products requiring dewing-preventing property are interior products such as wall paper, window and chandelier, in addition to the above-mentioned places and products requiring anti-haze property.

When the plastic molded article is used as a product having dewing-preventing property, non-restricted examples of suitable combinations of components thereof are as follows.

| | |
|---|---|
| (A) Organometallic compound (its oligomer or cooligomer) | 1 to 100 parts |
| Organometallic compound represented by the above-mentioned formula (1), in which at least one of $R^1$ and $R^2$ is a group containing fluorine atom, particularly b is 1 to 5, M is B, Al, Ti, Zr or Si. | |
| (B) Resin for paints | 100 parts |
| Fluoroolefin copolymer having hydroxyl group and/or carboxyl group, acrylic silicon resin, acrylic polyol resin, acrylic lacquer resin, or homopolymer or copolymer of vinylidene fluoride containing no functional group which are solvent-soluble. | |
| (C) Curing agent and/or curing catalyst | 0.001 to 100 parts |
| (D) Hydrolyzing catalyst | 0.001 to 50 parts |
| (E) Solvent | 10 to 2,000 parts |

(continued)

| | |
|---|---|
| (F) Ultraviolet ray absorber | 0.1 to 40 parts |
| (G) Plastic substrate | |
| Any of the above-mentioned plastic substrates and composite substrates thereof. | |

The plastic molded article of the present invention is also useful as a product having anti-static property. When the plastic molded article of the present invention having a hydrophilized surface is used, since an electrically conductive layer is distributed on an outermost surface layer of a coating layer and a coating film is closely adhered to a substrate, the conductive layer is not flowed away by rainfall with a lapse of time unlike the case of simply coating a hydrophilization agent such as a surfactant. Thus a function of hydrophilization can be maintained, a water film as an electrically conductive layer is easily formed and electrostatic charging can be prevented for a long period of time.

Places and products requiring anti-static property are various products used at places such as clean room for production of semiconductor where adherence of dusts is required to be inhibited as much as possible; electronic and electric appliances, precise appliances and peripheral products thereof such as floppy disc, video tape, audio tape and compact disc in which lowering of performance and malfunction are caused by adherence of dusts; display case, lens, window, mirror, outdoor display articles (advertising panel, sign, etc.), housing facilities, sound-proof wall, carport, house for agriculture, tent house, tent for eaves, various leisure products, camera casing, camera cover, camera filter, fishing things, ski board, shoes and bag, in which adherence of dusts results in lowering of a property of keeping clear pattern, appearance, transparency and functions thereof; and the like.

When the plastic molded article is used as a product having anti-static property, non-restricted examples of suitable combinations of components thereof are as follows.

| | |
|---|---|
| (A) Organometallic compound (its oligomer or cooligomer) | 1 to 100 parts |
| Organometallic compound represented by the above-mentioned formula (1), in which at least one of $R^1$ and $R^2$ is a group containing fluorine atom, particularly b is 1 to 5, M is B, Al, Ti, Zr or Si. | |
| (B) Resin for paints | 100 parts |
| Fluoroolefin copolymer having hydroxyl group and/or carboxyl group, acrylic silicon resin, acrylic polyol resin, acrylic lacquer resin, or homopolymer or copolymer of vinylidene fluoride containing no functional group which are solvent-soluble. | |
| (C) Curing agent and/or curing catalyst | 0.001 to 100 parts |
| (D) Hydrolyzing catalyst | 0.001 to 50 parts |
| (E) Solvent | 10 to 2,000 parts |
| (F) Ultraviolet ray absorber | 0.1 to 40 parts |
| (G) Plastic substrate | |
| Any of the above-mentioned plastic substrates and composite substrates thereof. | |

Further the plastic molded article of the present invention is also useful as a product having biocompatibility. When the plastic molded article of the present invention having a hydrophilized surface is used, it can be expected that a surface of a product to be transplanted in vivo such as an artificial blood vessel is made hydrophilic continuously, a film of in vivo hydrophilic liquid is formed on the surface and growth of endothelial cell having anti-thrombotic function in a blood vessel is advanced.

Examples of places and products requiring biocompatibility are various artificial blood vessels, organs and joints to be transplanted in vivo; various embedded parts such as screws for curing fractures; catheter, dilator, binding device for operation, indwelling tube in vivo, jointing device, separation membrane, wound covering material; and the like.

When the plastic molded article is used as a product having biocompatibility, non-restricted examples of suitable combinations of components thereof are as follows.

| | |
|---|---|
| (A) Organometallic compound (its oligomer or cooligomer) | 1 to 100 parts |
| Organometallic compound represented by the above-mentioned formula (1), in which at least one of $R^1$ and $R^2$ is a group containing fluorine atom, particularly b is 1 to 5, M is B, Al, Ti, Zr or Si. | |
| (B) Resin for paints | 100 parts |
| Fluoroolefin copolymer having hydroxyl group and/or carboxyl group, acrylic silicon resin, acrylic polyol resin, acrylic lacquer resin, or homopolymer or copolymer of vinylidene fluoride containing no functional group which are solvent-soluble. | |
| (C) Curing agent and/or curing catalyst | 0.001 to 100 parts |
| (D) Hydrolyzing catalyst | 0.001 to 50 parts |
| (E) Solvent | 10 to 2,000 parts |
| (F) Ultraviolet ray absorber | 0.1 to 40 parts |
| (G) Plastic substrate | |
| Any of the above-mentioned plastic substrates and composite substrates thereof. Particularly substrates or composite substrates of polyvinl chloride, polyalkyl ether resin, polyolefin, soft polyurethane, thermoplastic acrylic resin, polysulfone, polyurethane elastomer, fluoroolefin resin, cellulose resin, polyether, silicone resin and silicone elastomer and composite substrates thereof. | |

The present invention also relates to products having the above-mentioned properties. Tables 1 to 3 show a relation between form and properties of the plastic molded article of the present invention and final products.

In the column of Form in those tables, A indicates the case where the plastic molded article of the present invention can be used as a final product as it is; and B indicates the case where a product is usually produced mainly by using a substrate other than plastic and jointing the plastic molded article of the present invention to the substrate by adhering, etc.

TABLE 1

| Application | Product | Form | | | | |
|---|---|---|---|---|---|---|
| | | Film | Sheet | Plate | Tube | Other molded article |
| Display case | Display case for keeping cool | B | B | A | | |
| | Display case for frozen food | B | B | A | | |
| | Display case for keeping warm | B | B | A | | |
| Goggle | Protection goggle | B | B | A | | |
| | Goggle for sports | B | B | A | | |
| | Goggle for diving | B | B | A | | |
| Lens | Lens for glasses | B | B | | | A |
| | Lens for camera | B | B | | | A |
| | Optical lens | B | B | | | A |
| | Lens for illumination | B | B | | | A |
| | Lens for copying machine | B | B | | | A |
| | Lens for semi-conductor | | | | | A |

- continued -

-continued -

| Function | | | | | |
|---|---|---|---|---|---|
| Anti-haze property | Dewing-preventing property | Prevention of electrostatic charge | Stain-removable property | Water-draining property | Bio-compatibility |
| ○ | ○ | ○ | ○ | ○ | |
| ○ | ○ | ○ | ○ | ○ | |
| ○ | ○ | ○ | ○ | ○ | |
| ○ | ○ | ○ | ○ | ○ | |
| ○ | ○ | ○ | ○ | ○ | |
| ○ | ○ | ○ | ○ | ○ | |
| ○ | ○ | ○ | ○ | | |
| ○ | ○ | ○ | ○ | | |
| ○ | ○ | ○ | ○ | | |
| ○ | ○ | ○ | ○ | | |
| ○ | | ○ | ○ | | |
| ○ | | ○ | ○ | | |

- continued -

- continued -

| Application | Product | Form | | | | |
|---|---|---|---|---|---|---|
| | | Film | Sheet | Plate | Tube | Other molded article |
| Window, windshield glass | Automobile | B | B | A | | |
| | Railway train | B | B | A | | |
| | Aircraft | B | B | A | | |
| | Ship | B | B | A | | |
| | Submarine | B | B | A | | |
| | Snowmobile | B | B | A | | |
| | Gondola | B | B | A | | |
| | Spaceship | B | B | | | |
| | Motorcycle | B | B | A | | |
| | Building | B | B | A | | |
| | Watching tower | B | B | A | | |
| | Lighthouse | B | B | A | | |

- continued -

- continued -

| Function | | | | | |
|---|---|---|---|---|---|
| Anti-haze property | Dewing-preventing property | Prevention of electrostatic charging | Stain-removable property | Water-draining property | Bio-compatibility |
| ○ | | ○ | ○ | | |
| ○ | | ○ | ○ | | |
| ○ | | ○ | ○ | | |
| ○ | | ○ | ○ | | |
| ○ | | ○ | ○ | | |
| ○ | | ○ | ○ | | |
| ○ | | ○ | ○ | | |
| ○ | | ○ | ○ | | |
| ○ | | ○ | ○ | | |
| ○ | | ○ | ○ | | |
| ○ | | ○ | ○ | | |
| ○ | | ○ | ○ | | |

TABLE 2

| Application | Product | Form | | | | |
|---|---|---|---|---|---|---|
| | | Film | Sheet | Plate | Tube | Other molded article |
| Covering material | Rearview camera for car | B | B | A | | |
| | Monitoring camera | B | B | A | | |
| | Traffic signal | B | B | A | | |
| | Front light for vehicle | B | B | | | A |
| | Solar cell | A,B | | | | A |
| | Heat collector of solar water heater | A,B | A | A | | |
| Cover sheet | Cover for car | A | | | | |
| | Cover for building | | A | | | |
| Housing facilities | Toilet stool | B | | | | A |
| | Bath tub | B | | | | A |
| | Washstand | B | | | | A |
| | Lighting apparatus | B | | | | A |
| | Cover for light | B | | | | A |

- continued -

- continued -

| Function | | | | | |
|---|---|---|---|---|---|
| Anti-haze property | Dewing-preventing property | Prevention of electrostatic charging | Stain-removable property | Water-draining property | Bio-compatibility |
| ○ | ○ | ○ | ○ | | |
| ○ | ○ | ○ | ○ | | |
| ○ | ○ | ○ | ○ | | |
| ○ | ○ | ○ | ○ | | |
| ○ | ○ | ○ | ○ | | |
| ○ | ○ | ○ | ○ | | |
| | | ○ | ○ | | |
| | | ○ | ○ | | |
| | | | ○ | ○ | |
| | | | ○ | ○ | |
| | | | ○ | ○ | |
| | | ○ | ○ | | |
| | | ○ | ○ | | |

- continued -

- continued -

| Application | Product | Form | | | | |
|---|---|---|---|---|---|---|
| | | Film | Sheet | Plate | Tube | Other molded article |
| Housing facilities | Ventilation fan | B | | | | A |
| | Blind | B | | A | | |
| | Trough | B | | | | A |
| | Wall paper | A,B | | | | |
| | Pipe | | | | A | |
| For agriculture | Greenhouse | A | | A | | |
| Signal, advertising panel | Traffic signal | B | | A | | |
| | Advertising panel | B | | A | | |
| | Electric sign | B | | A | | |
| | Store sign | B | | A | | |
| | Name plate | B | | A | | |
| Material in the form of film | Tent | B | A | | | |
| | Eaves sign sheet | B | A | | | |

- continued -

- continued -

| Function | | | | | |
|---|---|---|---|---|---|
| Anti-haze property | Dewing-preventing property | Prevention of electrostatic charging | Stain-removable property | Water-draining property | Bio-compatibility |
| | | ○ | ○ | | |
| | | ○ | ○ | | |
| | | | ○ | | |
| | ○ | ○ | ○ | | |
| | | | ○ | ○ | |
| ○ | ○ | ○ | ○ | | |
| ○ | | ○ | ○ | | |
| ○ | | ○ | ○ | | |
| ○ | | ○ | ○ | | |
| ○ | | ○ | ○ | | |
| ○ | | ○ | ○ | | |
| | | ○ | ○ | | |
| | | ○ | ○ | | |

TABLE 3

| Application | Product | Form | | | | |
|---|---|---|---|---|---|---|
| | | Film | Sheet | Plate | Tube | Other molded article |
| Shield | For helmet | | | A | | |
| | Protection mask | | | A | | |
| | Mask for sports | | | A | | |
| | Gas mask | | | A | | |
| Medical | Contact lens | | | | | A |
| | Intraocularlens | | | | | A |
| | Catherter | | | | A | |
| | Artificial blood vessel | | | | A | |
| Kitchen utensils | Tableware | | | | | A |
| | Washing machine | | | | | A |
| | Triangular case for sink | | | | | A |
| | Mixing bowl | | | | | A |

- continued -

- continued -

| Function | | | | | |
|---|---|---|---|---|---|
| Anti-haze property | Dewing-preventing property | Prevention of electrostatic charging | Stain-removable property | Water-draining property | Bio-compatibility |
| ○ | ○ | ○ | ○ | | |
| ○ | ○ | ○ | ○ | | |
| ○ | ○ | ○ | ○ | | |
| ○ | ○ | ○ | ○ | | |
| | | | | | ○ |
| | | | | | ○ |
| | | | | | ○ |
| | | | | | ○ |
| | | ○ | ○ | | |
| | | ○ | ○ | | |
| | | ○ | ○ | | |
| | | ○ | ○ | | |

- continued -

- continued -

| Application | Product | Form | | | | |
|---|---|---|---|---|---|---|
| | | Film | Sheet | Plate | Tube | Other molded article |
| Housing, parts | Magnetic recording media | B | | | | A |
| | Optical recording media | B | | | | A |
| | Photo-electro-magnetic recording media | B | | | | A |
| | Audio tape | B | | | | A |
| | Video tape | B | | | | A |
| | Domestic electric appliances | B | | | | A |
| | OA apparatuses | B | | | | A |
| Mirror | Fender mirror for car | B | | | | |
| | Mirror for bath | B | | | | |
| | Mirror for washstand | B | | | | |
| | Mirror for curved road | B | | | | |
| | Dental mirror | B | | | | |

- continued -

- continued -

| Function | | | | | |
|---|---|---|---|---|---|
| Anti-haze property | Dewing-preventing property | Prevention of electrostatic charging | Stain-removable property | Water-draining property | Bio-compatibility |
| | | ○ | | | |
| | | ○ | | | |
| | | ○ | | | |
| | | ○ | | | |
| | | ○ | | | |
| | | ○ | ○ | | |
| | | ○ | ○ | | |
| ○ | | ○ | ○ | | |
| ○ | | ○ | ○ | | |
| ○ | | ○ | ○ | | |
| ○ | | ○ | ○ | | |
| ○ | | ○ | ○ | | |

Among the products shown in Tables 1 to 3, represented ones are film or sheet for agriculture; film, sheet or board for outdoor product; and film, sheet, board and tube for building materials. More concretely there are film and sheet for house for agriculture; covering film for solar cell, sheet for tent, protection cloth for building, outdoor signs (advertising panel, sign panel), window, ceiling of carport, sound-proof wall for expressway, kitchen utensils, bath facilities (wall, etc.), various housing facilities (wall material, lighting apparatus, blind, trough, etc.), screen, tatami-mat, table cloth, table, and the like.

EXAMPLE

The present invention is then explained by means of examples, but is not limited to them.

Preparation of hydrophilizing coating composition

A hydrophilizing coating composition was prepared by using the following components and mixing them in a ratio shown in Table 4

Organometallic compound

(There are isomers of the following compounds and the following structural formulae show represented structures thereof. The isomers are branched, cyclic or three-dimensional.)

A-1:

$$RO(-Si(OR)_2-O)_4-R$$

(R is $-CH_3$ and $-CH_2C_2F_5$, and $-CH_3/-CH_2C_2F_5$ is 0.3)

A-2:

$$RO(-Si(OR)_2-O)_4-R$$

(R is $-CH_3$ and $-CH_2C_2F_5$, and $-CH_3/-CH_2C_2F_5$ is 0.5)

A-3:

$$RO(-Si(OR)_2-O)_4-R$$

(R is $-CH_3$ and $-CH_2C_2F_5$, and $-CH_3/-CH_2C_2F_5$ is 0.7)

A-4:

$$RO(-Si(OR)_2-O)_4-R$$

(R is $-CH_3$ and $-CH_2CF_2CFHCF_3$, and $-CH_3/-CH_2CF_2CFHCF_3$ is 0.3)

A-5:

$$RO(-Si(OR)_2-O)_4-R$$

(R is $-CH_3$ and $-CH_2CF_2CFHCF_3$, and $-CH_3/-CH_2CF_2CFHCF_3$ is 0.5)

A-6:

$$RO(-Si(OR)_2-O)_{15}-(-Si(OR)(R)-O)_3-R$$

(R is $-CH_3$)

A-7:

$$RO(-Si(OR)_2-O)_{10}-(-Si(OR)(R)-O)_{10}-R$$

(R is $-CH_3$)

A-8:

$$RO(-Si(OR)_2-O)_4-R$$

(R is $-CH_3$ and $-C_2H_4(CF_2)_7CF_3$, and $-CH_3/-C_2H_4(CF_2)_7CF_3$ is 0.5)

A-9:

$$RO(-Si(OR)_2-O)_4-R$$

(R is $-CH_3$ and $-C_2H_4(CF_2)_7CF_3$, and $-CH_3$/$-C_2H_4(CF_2)_7CF_3$ is 0.3)

Resin for paint

B-1:
Tetrafluoroethylene copolymer (ZEFFLE GK-510 available from DAIKIN INDUSTRIES, LTD., Weight average molecular weight: about 40,000)
B-2:
Vinylidene fluoride copolymer (ZEFFLE LC-941 available from DAIKIN INDUSTRIES, LTD., Weight average molecular weight: about 60,000)
B-3:
Vinylidene fluoride copolymer (ZEFFLE LC-950 available from DAIKIN INDUSTRIES, LTD., Weight average molecular weight: about 60,000)
B-4:
Vinylidene fluoride copolymer (ZEFFLE LC-974 available from DAIKIN INDUSTRIES, LTD., Weight average molecular weight: about 96,000)
B-5:
Vinylidene fluoride copolymer (ZEFFLE LC-700 available from DAIKIN INDUSTRIES, LTD., Weight average molecular weight: about 80,000)
B-6:
Hydroxyl-containing acrylic resin (Dianal LR-237 available from Mitsubishi Rayon Kabushiki Kaisha, Weight average molecular weight: about 55,000, Hydroxyl value of resin: 50 mgKOH/g)
B-7:
Hydroxyl-containing acrylic resin (Dianal LR-237 available from Mitsubishi Rayon Kabushiki Kaisha, Weight average molecular weight: about 28,000, Hydroxyl value of resin: 108 mgKOH/g)
B-8:
Thermoplastic acrylic resin (Dianal LR-637 available from Mitsubishi Rayon Kabushiki Kaisha, Weight average molecular weight: about 55,000)

Curing agent

C-1:
Isocyanate curing agent (CORONATE HX available from Nippon Polyurethaane Co., Ltd., NCO/OH = 1)

Curing accelerator

C-2:
Dibutyltindilaurate

Hydrolyzing catalyst

D-1:
Aluminum chelate (Aluminum Chelate M available from Kawaken Fine Chemical Co., Ltd.)
D-2:
Aluminum chelate (Aluminum Chelate D available from Kawaken Fine Chemical Co., Ltd.)

Solvent

E-1:
Butyl acetate (in an amount so that a resin content becomes 20 % by weight)

Ultraviolet ray absorber

F-1:
Benzophenone type ultraviolet ray absorber (BIOSORE 130 available from Kyodo Yakuhin Kabushiki Kaisha)

In Table 4, Comparative coaling composition 1 is a silicone paint (available from Toto Kiki Kabushiki Kaisha) containing a titanium oxide type photocatalyst, and Comparative coating compositions 2 to 5 are paints prepared by adding an ultraviolet ray absorber only to the resin for paints shown in Table 4 (and by using a solvent).

TABLE 4

| No. of Hydrophilizing coating composition | Organometal compound (PHR) | | Resin for paint | Curing agent NCO/OH | Curing accelerator | Hydrolyzing catalyst | Solvent | Ultraviolet ray absorber |
|---|---|---|---|---|---|---|---|---|
| | For hydrophilization | For leveling | | | | | | |
| 1 | A-1(10) | A-8(0.1) | B-1 | C-1(1.0) | - | - | E-1 | F-1(0.2) |
| 2 | A-1(10) | A-8(0.1) | B-2 | - | - | - | E-1 | F-1(0.2) |
| 3 | A-2(10) | A-8(0.1) | B-3 | - | - | - | E-1 | F-1(0.2) |
| 4 | A-2(10) | A-8(0.1) | B-4 | - | - | - | E-1 | F-1(0.2) |
| 5 | A-3(10) | A-8(0.1) | B-5/B-6 (1/1) | C-1(1.0) | C-2(0.01) | - | E-1 | F-1(0.2) |
| 6 | A-3(10) | A-8(0.1) | B-8 | - | - | - | E-1 | F-1(0.2) |
| 7 | A-3(10) | A-8(0.1) | B-7 | C-1(1.0) | - | - | E-1 | F-1(0.2) |
| 8 | A-4(10) | A-8(0.1) | B-1 | C-1(1.0) | - | - | E-1 | F-1(0.2) |
| 9 | A-4(10) | A-8(0.1) | B-2 | - | - | - | E-1 | F-1(0.2) |
| 10 | A-5(10) | A-8(0.1) | B-5/B-6 (1/1) | C-1(1.0) | C-2(0.01) | - | E-1 | F-1(0.2) |

- continued -

- continued -

| No. of Hydrophilizing coating composition | Organometal compound (PHR) | | Resin for paint | Curing agent NCO/OH | Curing accelerator | Hydrolyzing catalyst | Solvent | Ultraviolet ray absorber |
|---|---|---|---|---|---|---|---|---|
| | For hydrophilization | For leveling | | | | | | |
| 11 | A-5(10) | A-8(0.1) | B-7 | C-1(1.0) | - | - | E-1 | F-1(0.2) |
| 12 | A-6(15) | - | B-1 | C-1(1.0) | - | D-1(1) | E-1 | F-1(0.2) |
| 13 | A-6(15) | - | B-2 | - | - | D-1(1) | E-1 | F-1(0.2) |
| 14 | A-7(15) | - | B-5/B-6 (1/1) | C-1(1.0) | C-2(0.01) | D-2(1) | E-1 | F-1(0.2) |
| 15 | A-7(15) | - | B-7 | C-1(1.0) | - | D-2(1) | E-1 | F-1(0.2) |
| Comparative coating composition 1 | - | - | - | - | - | - | - | - |
| 2 | - | - | B-1 | C-1(1.0) | - | - | E-1 | F-1(3) |
| 3 | - | - | B-2 | - | - | - | E-1 | F-1(3) |
| 4 | - | - | B-8 | - | - | - | E-1 | F-1(3) |
| 5 | - | - | B-7 | C-1(1.0) | - | - | E-1 | F-1(3) |

EXAMPLE 1

Hydrophilizing coating composition containing components shown in Table 4 were coated on polyester films (TETORON OHW available from Teijin, Ltd., thickness: 150 μm) by using a bar coater, dried at room temperature for seven days and further dried outdoor for seven days to give a polyester film molded article having a coating thickness of 20 μm.
With respect to the obtained polyester film molded article, the following tests were carried out. Comparative paint 1 was coated on a commercially available plastic film (HYDROTECT available from Toto Kiki Kabushiki Kaisha) in a thickness of 1 μm and subjected to testing. The results are shown in Table 5.

(High stain-proofing property)

The plastic molded article was set on an exposure rack placed at an angle of 30° and 90° (vertical) being faced toward southern direction on a roof of 3-storied building in Osaka Prefecture, and exposed outdoor for twelve months.
A difference between an initial lightness and a lightness after the exposure was measured with a color-difference meter (CR-300 available from Minolta Co., Ltd.) (Measurements were made at 10 points per one sample with a white paper). A difference in average lightness is obtained by dividing an average lightness before the exposure by an average lightness after the exposure.
Surface conditions after the exposure were evaluated with naked eyes according to the following criteria.

◎ : Stain in the form of line caused due to rainfall are slight and almost no scattering of stain is found.
○ : Stain in the form of line caused due to rainfall partly appear slightly and scattering of staining is slight.
△ : Stain in the form of line caused due to rainfall appear over the whole surface and scattering of staining is seen.
X : Stain in the form of line caused due to rainfall and scattering of staining are seen over the whole surface and appearance is significantly poor.

(Accelerated weathering resistance)

Accelerated weathering test was carried out by using an accelerated weathering tester (Subshine weather-O-meter available from Suga Shikennki Kabushiki Kaisah) for two hours at 63°C of black panel temperature when emitting light under a rainfall cycle of 18 minutes to evaluate a gloss retention ratio, color difference and appearance (under above-mentioned criteria with naked eyes).

(Abrasion resistance)

The following abrasion treatment was conducted by using a cotton cloth and aluminum plate and a water contact angle before and after the abrasion treatment was measured. Also an increasing ratio of water contact angle was calculated by the following equation:

$$\text{Increasing ratio of water contact angle (\%)} = (\text{Contact angle before treatment}) / (\text{Contact angle after treatment}) \times 100$$

An abrasion resistance becomes poor as the water contact angle after the abrasion treatment increases.

Abrasion test with cotton cloth

A hydrophilizing coating film of a sample is rubbed with a cotton cloth (BEMCOT M-3 available from Asahi Chemical Co., Ltd.) 400 times at a load of 100 g by using a rubbing tester available from Taihei Rika Kogyo Kabushiki Kaisha.

Abrasion test with aluminum plate

A hydrophilic coating film of a sample is rubbed with an aluminum plate 10 times by hand.

TABLE 5

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 1-1 | 1 | 1.80 | ◎ | 1.60 | ◎ |
| 1-2 | 2 | 1.70 | ◎ | 1.70 | ◎ |
| 1-3 | 3 | 1.90 | ◎ | 1.55 | ◎ |
| 1-4 | 4 | 1.90 | ◎ | 1.80 | ◎ |
| 1-5 | 5 | 1.85 | ◎ | 1.70 | ◎ |
| 1-6 | 6 | 1.80 | ◎ | 1.90 | ◎ |
| 1-7 | 7 | 1.90 | ◎ | 1.90 | ◎ |
| 1-8 | 8 | 1.77 | ◎ | 1.80 | ◎ |
| 1-9 | 9 | 1.80 | ◎ | 1.70 | ◎ |
| 1-10 | 10 | 1.90 | ◎ | 1.88 | ◎ |
| 1-11 | 11 | 1.90 | ◎ | 1.95 | ◎ |
| 1-12 | 12 | 2.10 | ◎ | 2.10 | ◎ |
| 1-13 | 13 | 2.20 | ◎ | 2.20 | ◎ |
| 1-14 | 14 | 1.99 | ◎ | 2.30 | ◎ |
| 1-15 | 15 | 1.88 | ◎ | 2.40 | ◎ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 85 | 1.0 | ◎ | 20 | 45 | 2.25 | 20 | 48 | 2.40 |
| 85 | 1.2 | ◎ | 22 | 36 | 1.64 | 22 | 50 | 2.27 |
| 80 | 1.5 | ◎ | 21 | 50 | 2.38 | 21 | 55 | 2.62 |
| 70 | 1.5 | ◎ | 22 | 50 | 2.27 | 22 | 45 | 2.05 |
| 80 | 1.0 | ◎ | 25 | 45 | 1.80 | 25 | 49 | 1.96 |
| 68 | 3.0 | ○ | 27 | 55 | 2.04 | 27 | 56 | 2.07 |
| 70 | 3.0 | ○ | 20 | 40 | 2.00 | 20 | 55 | 2.75 |
| 88 | 1.0 | ◎ | 22 | 40 | 1.82 | 22 | 55 | 2.50 |
| 80 | 1.3 | ◎ | 24 | 38 | 1.58 | 24 | 57 | 2.38 |
| 75 | 1.5 | ◎ | 25 | 46 | 1.84 | 25 | 54 | 2.16 |
| 70 | 3.0 | ○ | 24 | 50 | 2.04 | 24 | 59 | 2.46 |
| 88 | 1.2 | ◎ | 40 | 55 | 1.38 | 40 | 65 | 1.63 |
| 80 | 1.5 | ◎ | 43 | 57 | 1.33 | 43 | 64 | 1.49 |
| 80 | 1.5 | ◎ | 46 | 50 | 1.09 | 46 | 66 | 1.43 |
| 70 | 3.0 | ○ | 45 | 55 | 1.22 | 45 | 65 | 1.44 |

- continued -

- continued -

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 1-16 | un-coated | 12.00 | × | 11.00 | × |
| 1-17 | Comparative coating composition 1 | 1.60 | ◎ | 1.20 | ◎ |
| 1-18 | Comparative coating composition 2 | 7.50 | △ | 4.00 | △ |
| 1-19 | Comparative coating composition 3 | 8.00 | △ | 4.50 | △ |
| 1-20 | Comparative coating composition 4 | 7.00 | △ | 3.50 | △ |
| 1-21 | Comparative coating composition 5 | 6.00 | △ | 3.20 | △ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color Difference | Appearance | Initial value | After treating | Increasing ratio | Initial value | After treating | Increasing ratio |
| 40 | 6.0 | × | 75 | 77 | 1.03 | 75 | 76 | 1.01 |
| 60 | 5.0 | × | 7 | 73 | 10.43 | 7 | 74 | 10.57 |
| 80 | 1.0 | ◎ | 90 | 93 | 1.03 | 90 | 89 | 0.99 |
| 80 | 1.5 | ◎ | 88 | 89 | 1.01 | 88 | 85 | 0.97 |
| 50 | 4.5 | × | 75 | 77 | 1.03 | 75 | 70 | 0.93 |
| 50 | 4.0 | × | 77 | 80 | 1.04 | 77 | 78 | 1.01 |

As is evident from the results shown in Table 5, in case of an un-treated polyester film (Experiment No. 1-16), adherence of staining substances is much and accelerated weather resistance is poor. In case of a photocatalyst-treated polyester film (Experiment No. 1-17), adherence of staining substances is much and abrasion resistance is

poor. In case of a polyester film having a fluorine-containing resin coating film containing no organometallic compound for hydrophilization (Experiment Nos. 1-18 and 1-19), staining substances adhere much. Also in case of a polyester film having a coating film of acrylic resin paint containing no organometallic compound for hydrophilization (Experiment Nos. 1-20 and 1-21), staining substances adhere much and weather resistance is poor. On the contrary, the polyester film molded article of the present invention has well-balanced excellent stain-proofing property, abrasion resistance and weather resistance.

EXAMPLE 2

Hydrophilizing coating composition having components shown in Table 4 were coated on a transparent soft polyvinyl chloride film (CLEANACE available from Mitsubishi Chemical Vinyl Co., Ltd., thickness: 100 μm) with a bar coater, dried at room temperature for seven days and further dried outdoor for seven days to give a polyvinyl chloride film molded article having a coating thickness of 20 μm.

With respect to the obtained polyvinyl chloride film molded article, the same tests as in Example 1 were carried out. The results are shown in Table 6.

TABLE 6

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 2-1 | 1 | 1.90 | ◎ | 1.63 | ◎ |
| 2-2 | 2 | 1.80 | ◎ | 1.53 | ◎ |
| 2-3 | 3 | 1.87 | ◎ | 1.76 | ◎ |
| 2-4 | 4 | 1.77 | ◎ | 1.66 | ◎ |
| 2-5 | 5 | 1.85 | ◎ | 1.68 | ◎ |
| 2-6 | 6 | 1.69 | ◎ | 1.56 | ◎ |
| 2-7 | 7 | 1.89 | ◎ | 1.73 | ◎ |
| 2-8 | 8 | 1.97 | ◎ | 1.78 | ◎ |
| 2-9 | 9 | 1.95 | ◎ | 1.73 | ◎ |
| 2-10 | 10 | 1.93 | ◎ | 1.77 | ◎ |
| 2-11 | 11 | 1.90 | ◎ | 1.84 | ◎ |
| 2-12 | 12 | 2.09 | ◎ | 1.99 | ◎ |
| 2-13 | 13 | 2.10 | ◎ | 1.98 | ◎ |
| 2-14 | 14 | 2.23 | ◎ | 1.96 | ◎ |
| 2-15 | 15 | 2.18 | ◎ | 1.99 | ◎ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 86 | 1.20 | ◎ | 27 | 48 | 1.78 | 27 | 49 | 1.81 |
| 85 | 1.20 | ◎ | 29 | 46 | 1.59 | 29 | 53 | 1.83 |
| 82 | 1.60 | ◎ | 26 | 52 | 2.00 | 26 | 57 | 2.19 |
| 70 | 1.50 | ◎ | 27 | 53 | 1.96 | 27 | 56 | 2.07 |
| 88 | 1.00 | ◎ | 29 | 56 | 1.93 | 29 | 59 | 2.03 |
| 68 | 3.00 | ○ | 29 | 57 | 1.97 | 29 | 55 | 1.90 |
| 70 | 3.00 | ○ | 30 | 48 | 1.60 | 30 | 53 | 1.77 |
| 87 | 1.00 | ◎ | 29 | 43 | 1.48 | 29 | 58 | 2.00 |
| 83 | 1.30 | ◎ | 31 | 44 | 1.42 | 31 | 58 | 1.87 |
| 74 | 1.50 | ◎ | 28 | 46 | 1.64 | 28 | 55 | 1.96 |
| 71 | 3.00 | ○ | 26 | 51 | 1.96 | 26 | 59 | 2.27 |
| 87 | 1.20 | ◎ | 45 | 59 | 1.31 | 45 | 66 | 1.47 |
| 80 | 1.50 | ◎ | 46 | 58 | 1.26 | 46 | 67 | 1.46 |
| 80 | 1.50 | ◎ | 47 | 59 | 1.26 | 47 | 65 | 1.38 |
| 70 | 3.50 | ○ | 44 | 59 | 1.34 | 44 | 65 | 1.48 |

- continued -

- continued -

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 2-16 | un-coated | 14.00 | × | 10.30 | × |
| 2-17 | Comparative coating composition 2 | 7.40 | △ | 4.20 | △ |
| 2-18 | Comparative coating composition 3 | 6.70 | △ | 4.50 | △ |
| 2-19 | Comparative coating composition 4 | 6.90 | △ | 3.50 | △ |
| 2-20 | Comparative coating composition 5 | 6.10 | △ | 3.20 | △ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 38 | 6.80 | × | 80 | 78 | 0.98 | 80 | 75 | 0.94 |
| 77 | 1.50 | ◎ | 92 | 90 | 0.98 | 92 | 88 | 0.96 |
| 79 | 1.45 | ◎ | 90 | 88 | 0.98 | 90 | 86 | 0.96 |
| 49 | 4.30 | × | 76 | 75 | 1.00 | 76 | 71 | 0.93 |
| 45 | 4.20 | × | 78 | 80 | 1.03 | 78 | 79 | 1.01 |

As is evident from the results shown in Table 6, in case of an un-treated polyvinyl chloride film (Experiment No. 2-16), adherence of staining substances is much and weather resistance is poor. In case of a polyvinyl chloride film

having a fluorine-containing resin coating film containing no organometallic compound for hydrophilization (Experiment Nos. 2-17 and 1-18), staining substances adhere much. Also in case of a polyvinyl chloride film having a coating film of acrylic resin paint containing no organometallic compound for hydrophilization (Experiment Nos. 2-19 and 2-20), staining substances adhere much and weather resistance is poor. On the contrary, the polyvinyl chloride film molded article of the present invention has well-balanced excellent stain-proofing property, abrasion resistance and weather resistance.

EXAMPLE 3

Hydrophilizing coating composition having components shown in Table 4 were coated on a white soft polyvinyl chloride sheet (having a thickness of 2 mm and prepared by pre-mixing 100 parts by weight of soft vinyl chloride resin (degree of polymerization: 100), 50 parts by weight of dioctylphthalate, 3 parts by weight of barium stearate and 5 parts by weight of rutile type titanium oxide (CR-95 available from Ishihara Sangyo Kabushiki Kaisha), kneading with open rolls of 180°C and then forming into a sheet) with a bar coater, dried at room temperature for seven days and further dried outdoor for seven days to give a white polyvinyl chloride molded sheet having a coating thickness of 20 μm.

With respect to the obtained white polyvinyl chloride molded sheet, the same tests as in Example 1 were carried out. The results are shown in Table 7.

TABLE 7

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 3-1 | 1 | 1.88 | ◎ | 1.62 | ◎ |
| 3-2 | 2 | 1.87 | ◎ | 1.55 | ◎ |
| 3-3 | 3 | 1.67 | ◎ | 1.45 | ◎ |
| 3-4 | 4 | 1.70 | ◎ | 1.55 | ◎ |
| 3-5 | 5 | 1.84 | ◎ | 1.82 | ◎ |
| 3-6 | 6 | 1.66 | ◎ | 1.54 | ◎ |
| 3-7 | 7 | 1.90 | ◎ | 1.80 | ◎ |
| 3-8 | 8 | 1.98 | ◎ | 1.77 | ◎ |
| 3-9 | 9 | 1.95 | ◎ | 1.70 | ◎ |
| 3-10 | 10 | 1.94 | ◎ | 1.72 | ◎ |
| 3-11 | 11 | 1.93 | ◎ | 1.90 | ◎ |
| 3-12 | 12 | 2.10 | ◎ | 1.95 | ◎ |
| 3-13 | 13 | 2.20 | ◎ | 1.97 | ◎ |
| 3-14 | 14 | 1.99 | ◎ | 1.94 | ◎ |
| 3-15 | 15 | 2.10 | ◎ | 1.92 | ◎ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 90 | 1.24 | ◎ | 25 | 47 | 1.18 | 25 | 50 | 2.00 |
| 85 | 1.26 | ◎ | 29 | 50 | 1.72 | 29 | 54 | 1.86 |
| 85 | 1.60 | ◎ | 28 | 53 | 1.89 | 28 | 56 | 2.00 |
| 75 | 1.55 | ◎ | 30 | 52 | 1.73 | 30 | 58 | 1.93 |
| 84 | 1.10 | ◎ | 31 | 49 | 1.58 | 31 | 49 | 1.58 |
| 70 | 3.20 | ○ | 27 | 57 | 2.11 | 27 | 50 | 1.85 |
| 71 | 3.33 | ○ | 28 | 49 | 1.75 | 28 | 52 | 1.86 |
| 88 | 1.14 | ◎ | 28 | 48 | 1.71 | 28 | 58 | 2.00 |
| 87 | 1.35 | ◎ | 32 | 49 | 1.53 | 32 | 57 | 1.78 |
| 78 | 1.56 | ◎ | 31 | 50 | 1.61 | 31 | 59 | 1.90 |
| 75 | 3.20 | ○ | 30 | 52 | 1.73 | 30 | 60 | 2.00 |
| 89 | 1.23 | ◎ | 46 | 59 | 1.28 | 46 | 68 | 1.48 |
| 90 | 1.54 | ◎ | 47 | 57 | 1.21 | 47 | 66 | 1.40 |
| 81 | 1.45 | ◎ | 48 | 58 | 1.21 | 48 | 68 | 1.42 |
| 72 | 3.20 | ○ | 46 | 57 | 1.24 | 46 | 66 | 1.43 |

- continued -

- continued -

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 3-16 | un-coated | 13.00 | × | 10.00 | × |
| 3-17 | Comparative coating composition 2 | 7.89 | △ | 4.20 | △ |
| 3-18 | Comparative coating composition 3 | 6.90 | △ | 4.00 | △ |
| 3-19 | Comparative coating composition 4 | 6.50 | △ | 3.50 | △ |
| 3-20 | Comparative coating composition 5 | 6.20 | △ | 3.50 | △ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 40 | 6.90 | × | 78 | 76 | 0.97 | 78 | 79 | 1.01 |
| 80 | 1.60 | ◎ | 91 | 89 | 0.98 | 91 | 88 | 0.97 |
| 81 | 1.43 | ◎ | 90 | 87 | 0.97 | 90 | 86 | 0.96 |
| 44 | 4.20 | × | 75 | 77 | 1.03 | 75 | 74 | 0.99 |
| 50 | 4.10 | × | 79 | 79 | 1.00 | 79 | 78 | 0.99 |

As is evident from the results shown in Table 7, in case of an un-treated white polyvinyl chloride sheet (Experiment No. 3-16), adherence of staining substances is much and weather resistance is poor. In case of a white polyvinyl chloride sheet having a fluorine-containing resin coating film containing no organometallic compound for

hydrophilization (Experiment Nos. 3-17 and 3-18), staining substances adhere much. Also in case of a polyvinyl chloride sheet having a coating film of acrylic resin paint containing no organometallic compound for hydrophilization (Experiment Nos. 3-19 and 3-20), staining substances adhere much and weather resistance is poor. On the contrary, the polyvinyl chloride molded sheet of the present invention has well-balanced excellent stain-proofing property, abrasion resistance and weather resistance.

EXAMPLE 4

Hydrophilizing coating composition having components shown in Table 4 were coated on an ethylene-tetrafluoroethylene copolymer film (ETFE, NEOFLON ETFE Film EF0050Cl available from DAIKIN INDUSTRIES, LTD. thickness: 50 μm, coating surface is previously subjected to corona-discharge treatment) with a bar coater, dried at room temperature for seven days and further dried outdoor for seven days to give a ETFE film molded article having a coating thickness of 20 μm.

With respect to the obtained ETFE film molded article, the same tests as in Example 1 were carried out. The results are shown in Table 8.

TABLE 8

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 4-1 | 1 | 1.80 | ◎ | 1.66 | ◎ |
| 4-2 | 2 | 1.87 | ◎ | 1.55 | ◎ |
| 4-3 | 3 | 1.70 | ◎ | 1.44 | ◎ |
| 4-4 | 4 | 1.70 | ◎ | 1.55 | ◎ |
| 4-5 | 5 | 1.84 | ◎ | 1.80 | ◎ |
| 4-6 | 6 | 1.90 | ◎ | 1.40 | ◎ |
| 4-7 | 7 | 1.90 | ◎ | 1.78 | ◎ |
| 4-8 | 8 | 1.78 | ◎ | 1.77 | ◎ |
| 4-9 | 9 | 1.88 | ◎ | 1.70 | ◎ |
| 4-10 | 10 | 1.94 | ◎ | 1.72 | ◎ |
| 4-11 | 11 | 1.96 | ◎ | 1.88 | ◎ |
| 4-12 | 12 | 2.10 | ◎ | 1.90 | ◎ |
| 4-13 | 13 | 2.30 | ◎ | 1.90 | ◎ |
| 4-14 | 14 | 1.98 | ◎ | 1.90 | ◎ |
| 4-15 | 15 | 2.10 | ◎ | 1.87 | ◎ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 90 | 1.30 | ◎ | 26 | 46 | 1.77 | 24 | 50 | 2.08 |
| 88 | 1.28 | ◎ | 27 | 50 | 1.85 | 29 | 53 | 1.83 |
| 86 | 1.70 | ◎ | 28 | 52 | 1.86 | 28 | 56 | 2.00 |
| 77 | 1.60 | ◎ | 30 | 52 | 1.73 | 29 | 58 | 2.00 |
| 86 | 1.10 | ◎ | 32 | 48 | 1.50 | 31 | 48 | 1.55 |
| 70 | 3.10 | ○ | 29 | 58 | 2.00 | 26 | 50 | 1.92 |
| 70 | 3.20 | ○ | 29 | 48 | 1.66 | 29 | 51 | 1.76 |
| 89 | 1.10 | ◎ | 30 | 47 | 1.57 | 29 | 55 | 1.90 |
| 88 | 1.20 | ◎ | 31 | 49 | 1.58 | 32 | 56 | 1.75 |
| 79 | 1.55 | ◎ | 28 | 49 | 1.75 | 31 | 58 | 1.87 |
| 76 | 2.90 | ○ | 33 | 51 | 1.65 | 30 | 59 | 1.97 |
| 90 | 1.25 | ◎ | 47 | 58 | 1.23 | 47 | 67 | 1.43 |
| 90 | 1.40 | ◎ | 43 | 58 | 1.35 | 47 | 66 | 1.40 |
| 79 | 1.40 | ◎ | 44 | 58 | 1.27 | 48 | 68 | 1.42 |
| 70 | 3.10 | ○ | 45 | 56 | 1.24 | 49 | 66 | 1.35 |

- continued -

- continued -

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 4-16 | un-coated | 10.00 | × | 8.00 | × |
| 4-17 | Comparative coating composition 2 | 7.80 | △ | 4.00 | △ |
| 4-18 | Comparative coating composition 3 | 7.00 | △ | 4.00 | △ |
| 4-19 | Comparative coating composition 4 | 5.30 | △ | 3.50 | △ |
| 4-20 | Comparative coating composition 5 | 5.70 | △ | 3.00 | △ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 99 | 0.25 | ◎ | 77 | 78 | 1.01 | 77 | 79 | 1.03 |
| 82 | 1.40 | ◎ | 90 | 88 | 0.98 | 90 | 87 | 0.97 |
| 82 | 1.55 | ◎ | 90 | 88 | 0.98 | 90 | 86 | 0.96 |
| 46 | 4.10 | × | 76 | 76 | 1.00 | 74 | 73 | 0.99 |
| 52 | 4.2 | × | 78 | 76 | 0.97 | 76 | 77 | 1.01 |

As is evident from the results shown in Table 8, in case of an un-treated ETFE film (Experiment No. 4-16), adherence of staining substances is much. In case of a ETFE film having a fluorine-containing resin coating film containing no organometallic compound for hydrophilization (Experiment Nos. 4-17 and 4-18), staining substances adhere

much. Also in case of a ETFE film having a coating film of acrylic resin paint containing no organometallic compound for hydrophilization (Experiment Nos. 4-19 and 4-20), staining substances adhere much and weather resistance is poor. On the contrary, the ETFE film molded article of the present invention has well-balanced excellent stain-proofing property, abrasion resistance and weather resistance.

EXAMPLE 5

Hydrophilizing coating composition having components shown in Table 4 were coated on a tetrafluoroethylene-hexafluoropropylene copolymer film (FEP, NEOFLON FEP Film NF0100CI available from DAIKIN INDUSTRIES, LTD. thickness: 100 µm, coating surface is previously subjected to corona-discharge treatment) with a bar coater, dried at room temperature for seven days and further dried outdoor for seven days to give a FEP film molded article having a coating thickness of 20 µm.

With respect to the obtained FEP film molded article, the same tests as in Example 1 were carried out. The results are shown in Table 9.

TABLE 9

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 5-1 | 1 | 1.70 | ◎ | 1.66 | ◎ |
| 5-2 | 2 | 1.80 | ◎ | 1.55 | ◎ |
| 5-3 | 3 | 1.70 | ◎ | 1.44 | ◎ |
| 5-4 | 4 | 1.70 | ◎ | 1.50 | ◎ |
| 5-5 | 5 | 1.84 | ◎ | 1.80 | ◎ |
| 5-6 | 6 | 1.70 | ◎ | 1.60 | ◎ |
| 5-7 | 7 | 1.90 | ◎ | 1.78 | ◎ |
| 5-8 | 8 | 1.76 | ◎ | 1.90 | ◎ |
| 5-9 | 9 | 1.90 | ◎ | 1.70 | ◎ |
| 5-10 | 10 | 1.88 | ◎ | 1.70 | ◎ |
| 5-11 | 11 | 1.96 | ◎ | 1.88 | ◎ |
| 5-12 | 12 | 1.99 | ◎ | 2.00 | ◎ |
| 5-13 | 13 | 2.30 | ◎ | 2.00 | ◎ |
| 5-14 | 14 | 1.98 | ◎ | 1.60 | ◎ |
| 5-15 | 15 | 2.00 | ◎ | 1.77 | ◎ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 89 | 1.30 | ◎ | 25 | 45 | 1.80 | 24 | 50 | 2.08 |
| 88 | 1.30 | ◎ | 27 | 50 | 1.85 | 29 | 52 | 1.79 |
| 86 | 1.70 | ◎ | 28 | 53 | 1.99 | 29 | 56 | 1.93 |
| 77 | 1.65 | ◎ | 30 | 52 | 1.73 | 30 | 58 | 1.93 |
| 86 | 1.10 | ◎ | 32 | 48 | 1.50 | 31 | 49 | 1.58 |
| 70 | 2.90 | ○ | 30 | 58 | 1.93 | 26 | 50 | 1.92 |
| 69 | 2.95 | ○ | 29 | 48 | 1.66 | 29 | 51 | 1.76 |
| 88 | 1.10 | ◎ | 30 | 48 | 1.60 | 30 | 56 | 1.87 |
| 90 | 1.20 | ◎ | 31 | 49 | 1.58 | 31 | 56 | 1.81 |
| 80 | 1.60 | ◎ | 29 | 49 | 1.69 | 35 | 58 | 1.68 |
| 76 | 2.80 | ○ | 35 | 50 | 1.43 | 30 | 60 | 2.00 |
| 90 | 1.25 | ◎ | 47 | 57 | 1.21 | 45 | 67 | 1.49 |
| 90 | 1.35 | ◎ | 45 | 58 | 1.29 | 46 | 65 | 1.41 |
| 80 | 1.35 | ◎ | 44 | 56 | 1.27 | 48 | 67 | 1.40 |
| 70 | 2.97 | ○ | 46 | 55 | 1.20 | 49 | 64 | 1.31 |

- continued -

- continued -

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 5-16 | un-coated | 9.50 | × | 7.00 | × |
| 5-17 | Comparative coating composition 2 | 7.60 | △ | 3.50 | △ |
| 5-18 | Comparative coating composition 3 | 7.00 | △ | 4.00 | △ |
| 5-19 | Comparative coating composition 4 | 5.10 | △ | 3.00 | △ |
| 5-20 | Comparative coating composition 5 | 5.70 | △ | 3.00 | △ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 100 | 0.17 | ◎ | 80 | 81 | 1.01 | 80 | 79 | 0.99 |
| 82 | 1.40 | ◎ | 90 | 89 | 0.99 | 91 | 87 | 0.96 |
| 82 | 1.55 | ◎ | 90 | 88 | 0.98 | 89 | 85 | 0.96 |
| 45 | 4.2 | × | 73 | 77 | 1.05 | 75 | 73 | 0.97 |
| 52 | 4.00 | × | 74 | 76 | 1.03 | 77 | 77 | 1.00 |

As is evident from the results shown in Table 9, in case of an un-treated FEP film (Experiment No. 5-16), adherence of staining substances is much. In case of a FEP film having a fluorine-containing resin coating film containing no organometallic compound for hydrophilization (Experiment Nos. 5-17 and 5-18), staining substances adhere

much. Also in case of a FEP film having a coating film of acrylic resin paint containing no organometallic compound for hydrophilization (Experiment Nos. 5-19 and 5-20), staining substances adhere much and weather resistance is poor. On the contrary, the FEP film molded article of the present invention has well-balanced excellent stain-proofing property, abrasion resistance and weather resistance.

EXAMPLE 6

Hydrophilizing coating composition having components shown in Table 4 were coated on a polyvinylidene chloride film (Saran Wrap available from Asahi Kasei Kogyo Kabushiki Kaisha, thickness: 8 μm) with a bar coater, dried at room temperature for seven days and further dried outdoor for seven days to give a polyvinylidene chloride film molded article having a coating thickness of 10 μm.

With respect to the obtained polyvinylidene chloride film molded article, the same tests as in Example 1 were carried out. The results are shown in Table 10.

TABLE 10

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 6-1 | 1 | 1.60 | ◎ | 1.60 | ◎ |
| 6-2 | 2 | 1.77 | ◎ | 1.55 | ◎ |
| 6-3 | 3 | 1.70 | ◎ | 1.44 | ◎ |
| 6-4 | 4 | 1.70 | ◎ | 1.50 | ◎ |
| 6-5 | 5 | 1.84 | ◎ | 1.70 | ◎ |
| 6-6 | 6 | 1.70 | ◎ | 1.60 | ◎ |
| 6-7 | 7 | 1.90 | ◎ | 1.78 | ◎ |
| 6-8 | 8 | 1.67 | ◎ | 1.80 | ◎ |
| 6-9 | 9 | 1.88 | ◎ | 1.70 | ◎ |
| 6-10 | 10 | 1.90 | ◎ | 1.66 | ◎ |
| 6-11 | 11 | 1.89 | ◎ | 1.88 | ◎ |
| 6-12 | 12 | 1.90 | ◎ | 1.88 | ◎ |
| 6-13 | 13 | 2.20 | ◎ | 2.00 | ◎ |
| 6-14 | 14 | 1.98 | ◎ | 1.60 | ◎ |
| 6-15 | 15 | 2.00 | ◎ | 1.77 | ◎ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 90 | 1.30 | ◎ | 27 | 45 | 1.67 | 27 | 48 | 1.78 |
| 88 | 1.20 | ◎ | 27 | 49 | 1.81 | 27 | 52 | 1.93 |
| 86 | 1.60 | ◎ | 26 | 50 | 2.04 | 26 | 56 | 2.15 |
| 78 | 1.50 | ◎ | 30 | 52 | 1.73 | 30 | 58 | 1.93 |
| 87 | 1.10 | ◎ | 29 | 48 | 1.66 | 29 | 49 | 1.69 |
| 72 | 1.98 | ○ | 30 | 58 | 1.93 | 30 | 50 | 1.67 |
| 70 | 2.95 | ○ | 29 | 48 | 1.66 | 29 | 51 | 1.76 |
| 89 | 1.10 | ◎ | 26 | 47 | 1.81 | 26 | 55 | 2.12 |
| 90 | 1.20 | ◎ | 31 | 49 | 1.58 | 31 | 56 | 1.81 |
| 81 | 1.70 | ◎ | 29 | 49 | 1.69 | 29 | 55 | 1.90 |
| 76 | 2.70 | ○ | 35 | 50 | 1.43 | 35 | 60 | 1.71 |
| 90 | 1.25 | ◎ | 47 | 56 | 1.19 | 47 | 66 | 1.40 |
| 90 | 1.35 | ◎ | 45 | 58 | 1.29 | 45 | 65 | 1.44 |
| 70 | 1.20 | ◎ | 43 | 56 | 1.30 | 43 | 66 | 1.53 |
| 70 | 2.00 | ○ | 46 | 55 | 1.20 | 46 | 64 | 1.39 |

- continued -

- continued -

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 6-16 | un-coated | 12.00 | × | 10.00 | × |
| 6-17 | Comparative paint 2 | 7.40 | △ | 3.50 | △ |
| 6-18 | Comparative paint 3 | 7.00 | △ | 4.00 | △ |
| 6-19 | Comparative paint 4 | 5.00 | △ | 3.00 | △ |
| 6-20 | Comparative paint 5 | 5.50 | △ | 3.00 | △ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 50 | 5.70 | × | 84 | 83 | 0.99 | 84 | 87 | 1.04 |
| 83 | 1.40 | ◎ | 90 | 89 | 0.99 | 90 | 88 | 0.98 |
| 82 | 1.55 | ◎ | 90 | 88 | 0.98 | 90 | 85 | 0.94 |
| 45 | 4.2 | × | 73 | 77 | 1.05 | 73 | 74 | 1.01 |
| 52 | 4.50 | × | 74 | 76 | 1.03 | 74 | 77 | 1.04 |

As is evident from the results shown in Table 10, in case of an un-treated polyvinylidene chloride film (Experiment No. 6-16), adherence of staining substances is much and weather resistance is also poor. In case of a polyvinylidene chloride film having a fluorine-containing resin coating film containing no organometallic compound for

hydrophilization (Experiment Nos. 6-17 and 6-18), staining substances adhere much. Also in case of a polyvinylidene chloride film having a coating film of acrylic resin paint containing no organometallic compound for hydrophilization (Experiment Nos. 6-19 and 6-20), staining substances adhere much and weather resistance is poor. On the contrary, the polyvinylidene chloride film molded article of the present invention has well-balanced excellent stain-proofing property, abrasion resistance and weather resistance.

EXAMPLE 7

Hydrophilizing coating composition having components shown in Table 4 were coated on an acrylic resin plate (SUMIPEX E available from Sumitomo Chemical Industries, Ltd., thickness: 3 mm) with a bar coater, dried at room temperature for seven days and further dried outdoor for seven days to give an acrylic resin molded article having a coating thickness of 20 μm.

With respect to the obtained acrylic resin molded article, the same tests as in Example 1 were carried out. The results are shown in Table 11.

TABLE 11

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 7-1 | 1 | 1.40 | ◎ | 1.33 | ◎ |
| 7-2 | 2 | 1.77 | ◎ | 1.40 | ◎ |
| 7-3 | 3 | 1.70 | ◎ | 1.44 | ◎ |
| 7-4 | 4 | 1.60 | ◎ | 1.50 | ◎ |
| 7-5 | 5 | 1.84 | ◎ | 1.40 | ◎ |
| 7-6 | 6 | 1.70 | ◎ | 1.60 | ◎ |
| 7-7 | 7 | 1.90 | ◎ | 1.77 | ◎ |
| 7-8 | 8 | 1.70 | ◎ | 1.40 | ◎ |
| 7-9 | 9 | 1.70 | ◎ | 1.70 | ◎ |
| 7-10 | 10 | 1.90 | ◎ | 1.58 | ◎ |
| 7-11 | 11 | 1.77 | ◎ | 1.40 | ◎ |
| 7-12 | 12 | 1.67 | ◎ | 1.40 | ◎ |
| 7-13 | 13 | 1.99 | ◎ | 1.60 | ◎ |
| 7-14 | 14 | 1.98 | ◎ | 1.60 | ◎ |
| 7-15 | 15 | 1.88 | ◎ | 1.60 | ◎ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 90 | 1.30 | ◎ | 24 | 45 | 1.88 | 24 | 45 | 1.88 |
| 98 | 1.20 | ◎ | 28 | 48 | 1.71 | 28 | 53 | 1.89 |
| 88 | 1.50 | ◎ | 26 | 53 | 2.04 | 26 | 56 | 2.15 |
| 79 | 1.50 | ◎ | 30 | 52 | 1.73 | 30 | 58 | 1.93 |
| 87 | 1.10 | ◎ | 29 | 48 | 1.66 | 29 | 49 | 1.69 |
| 72 | 1.98 | ○ | 28 | 56 | 2.00 | 28 | 48 | 1.71 |
| 70 | 2.95 | ○ | 29 | 49 | 1.69 | 29 | 51 | 1.76 |
| 88 | 1.20 | ◎ | 26 | 49 | 1.88 | 26 | 55 | 2.12 |
| 89 | 1.40 | ◎ | 29 | 46 | 1.59 | 29 | 53 | 1.83 |
| 81 | 1.60 | ◎ | 29 | 49 | 1.69 | 29 | 55 | 1.90 |
| 76 | 2.70 | ○ | 30 | 46 | 1.53 | 30 | 59 | 1.97 |
| 89 | 1.40 | ◎ | 47 | 54 | 1.15 | 47 | 65 | 1.38 |
| 89 | 1.35 | ◎ | 45 | 58 | 1.29 | 45 | 62 | 1.38 |
| 72 | 1.20 | ◎ | 43 | 56 | 1.30 | 43 | 63 | 1.47 |
| 70 | 2.00 | ○ | 45 | 55 | 1.22 | 45 | 63 | 1.40 |

- continued -

- continued -

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 7-16 | un-coated | 11.00 | × | 8.90 | × |
| 7-17 | Comparative coating composition 2 | 6.99 | △ | 3.97 | △ |
| 7-18 | Comparative coating composition 3 | 5.90 | △ | 4.00 | △ |
| 7-19 | Comparative coating composition 4 | 4.80 | △ | 3.00 | △ |
| 7-20 | Comparative coating composition 5 | 5.00 | △ | 3.00 | △ |

- continued -

- continued -

| Accelerated weathering resistance | | | Abrasion resistance (cotton cloth) (water contact angle) | | | Abrasion resistance (aluminum) (water contact angle) | | |
|---|---|---|---|---|---|---|---|---|
| Gloss retention ratio | Color difference | Appearance | Initial value | After treating | Increasing ratio | Initial value | After treating | Increasing ratio |
| 54 | 5.50 | × | 81 | 83 | 1.02 | 81 | 83 | 1.02 |
| 82 | 1.40 | ◎ | 89 | 88 | 0.99 | 89 | 87 | 0.98 |
| 82 | 1.55 | ◎ | 89 | 88 | 0.99 | 89 | 85 | 0.96 |
| 45 | 4.0 | × | 75 | 76 | 1.01 | 75 | 75 | 1.00 |
| 52 | 4.50 | × | 75 | 76 | 1.01 | 75 | 77 | 1.03 |

As is evident from the results shown in Table 11, in case of an un-treated acrylic resin plate (Experiment No. 7-16), adherence of staining substances is much and weather resistance is also poor. In case of an acrylic resin plate

having a fluorine-containing resin coating film containing no organometallic compound for hydrophilization (Experiment Nos. 7-17 and 7-18), staining substances adhere much. Also in case of an acrylic resin plate having a coating film of acrylic resin paint containing no organometallic compound for hydrophilization (Experiment Nos. 7-19 and 7-20), staining substances adhere much and weather resistance is poor. On the contrary, the acrylic resin plate molded article of the present invention has well-balanced excellent stain-proofing property, abrasion resistance and weather resistance.

EXAMPLE 8

Hydrophilizing coating composition having components shown in Table 4 were coated on a white polyvinyl chloride sheet (thickness: 2 mm) produced in the same manner as in Example 3, with a gravure coater (Multi-coater M-200 available from HIRANO TECHSEED CO., LTD.), and dried to give a white polyvinyl chloride sheet having, on its surface, a hydrophilic coating film (thickness after drying: 10 μm). The sheet was cut and woven into a simple tent sheet.

A tent house (width: 6 m, height: 6 m, length 10 m) having a barrel roof was set in Osaka Prefecture by using the obtained tent sheet and exposed outdoor for 12 months. Staining on a vertical surface was evaluated and further stain-removable property was evaluated by the method mentioned below. The results are shown in Table 12.

(Stain-removable property)

A part of an exposed surface was brushed with flowing ion-exchanged water, and a difference in average lightness before and after washing and appearance (with naked eyes) were evaluated in the same manner as in the stain-proofing test. Appearance was evaluated under criteria mentioned below.

◎ : Stains are removed completely.
◯ : Stains remain slightly.
△ : Stains remain clearly.
X : Stains spread over the whole surface and can hardly be removed.

TABLE 12

| Experiment No. | Hydrophilizing coating composition | Stain-proofing property | | | |
|---|---|---|---|---|---|
| | | Vertical exposure for 12 months | | 30° exposure for 12 months | |
| | | Difference in average lightness | Appearance | Difference in average lightness | Appearance |
| 8-1 | 1 | 1.56 | ◎ | 0.10 | ◎ |
| 8-2 | 2 | 1.44 | ◎ | 0.11 | ◎ |
| 8-3 | 3 | 1.35 | ◎ | 0.12 | ◎ |
| 8-4 | 4 | 1.55 | ◎ | 0.09 | ◎ |
| 8-5 | 5 | 1.65 | ◎ | 0.17 | ◎ |
| 8-6 | 6 | 1.64 | ◎ | 0.10 | ◎ |
| 8-7 | 7 | 1.70 | ◎ | 0.10 | ◎ |
| 8-8 | 8 | 1.88 | ◎ | 0.21 | ◎ |
| 8-9 | 9 | 1.86 | ◎ | 0.22 | ◎ |
| 8-10 | 10 | 1.90 | ◎ | 0.18 | ◎ |
| 8-11 | 11 | 2.10 | ◎ | 0.11 | ◎ |
| 8-12 | 12 | 2.15 | ◎ | 0.18 | ◎ |
| 8-13 | 13 | 1.98 | ◎ | 0.23 | ◎ |
| 8-14 | 14 | 1.88 | ◎ | 0.24 | ◎ |
| 8-15 | 15 | 2.00 | ◎ | 0.17 | ◎ |

- continued -

- continued -

| Experiment No. | Hydrophilizing coating composition | Stain-proofing property | | | |
|---|---|---|---|---|---|
| | | Vertical exposure for 12 months | | 30° exposure for 12 months | |
| | | D difference in average lightness | Appearance | Difference in average lightness | Appearance |
| 8-16 | un-coated | 13.45 | × | 11.50 | × |
| 8-17 | Comparative coating composition 1 | 8.20 | △ | 2.10 | ○ |
| 8-18 | Comparative coating composition 2 | 6.80 | △ | 2.00 | ○ |
| 8-19 | Comparative coating composition 3 | 7.00 | △ | 1.80 | ○ |
| 8-20 | Comparative coating composition 4 | 7.30 | △ | 1.67 | ○ |
| 8-21 | Comparative coating composition 5 | 6.50 | △ | 3.30 | △ |

- continued -

EXAMPLE 9

A ETFE film as a substrate (NEOFLON ETFE Film EF 0100 available from DAWN INDUSTRIES, LTD., thickness: 100 μm) which had not been surface-treated was coated with a hydrophilizing coating composition shown in Table 4 on its both surfaces in the same manner as in Example 8 by using a gravure coater and dried to give a film having, on its surface, a hydrophilic coating film (thickness after drying: 10 μm). The obtained film was cut and woven into a film for agricultural house. A simple agricultural house (width: 3 m, height: 2 m, length 6 m) having a barrel roof was set in Osaka Prefecture by using the obtained film and exposed outdoor for 24 months. Stain-proofing property was evaluated in the same manner as in Example 1 and further stain-removable property was evaluated in the same manner as in Example 8. In the stain-proofing property test, a total light transmittance was also determined by using a direct-reading haze meter available from Kabushiki Kaisha Toyo Seiki Seisakusho. The results are shown in Table 13.

In Experiment 9-21, a film produced by laminating a polyvinyl fluoride film (TEDORA available from du Pont, thickness: 25 μm) to the above-mentioned ETFE film which had not been surface-treated, with an epoxy adhesive was used.

Further anti-haze property and dewing-preventing property were evaluated by the methods mentioned below. The results are shown in Table 13.

(Anti-haze property)

A test film before exposing was cut to a width of 80 mm × a length of 80 mm and fit to a mouth of a glass bottle (inner diameter: 60 mm, depth: 70 mm) containing 100 ml of pure water so that a hydrophilic coating film faced inside the bottle. The bottle was dipped in 40°C hot water (angle of inclination: about 22 degrees) and allowed to stand for 30 minutes. Then a haze degree of the film was evaluated with naked eyes under the criteria mentioned below.

◎ : Neither haze nor droplets were found.
○ : Haze and droplets were found on less than 10 % area of a bottle mouth.
□ : Haze and droplets were found on an area of not less than 10 % and less than 40 % of a bottle mouth.
△ : Haze and droplets were found on an area of not less than 40 % and less than 70 % of a bottle mouth.
X : Haze and droplets were found on not less than 70 % area of a bottle mouth.

(Dewing-preventing property)

Inner surface conditions of the above-mentioned agricultural house at five o'clock in wintertime (December) were observed with naked eyes (degree of dewing on inner surface). Further ion-exchanged water was sprayed on the inner surface by using a sprayer for domestic use to evaluate wettability with naked eyes (wettability by spraying). Evaluations were carried out respectively under the following criteria.

(Degree of dewing on inner surface)

◎ : Almost no droplets were found.
○ : Droplets were found partly but a shape of the droplet was flat.
△ : Droplets were found on an area of not less than 30 % and less than 60 % of an inner surface.
X : Droplets were found on not less than 60 % area of an inner surface.

(Wettability by spraying)

◎ : Sprayed water did not become droplets but became a water film and flowed down.
○ : Sprayed water was somewhat liquefied but a shape of the droplet was flat.
△ : Sprayed water became droplets appreciably and a shape of the droplet was spherical.
X : Most of sprayed water became droplets in the form of sphere.

TABLE 13

| Experiment No. | Hydrophilizing coating composition | Stain-proofing property | |
|---|---|---|---|
| | | Difference in average lightness | Total light transmittance (%) |
| 9-1 | 1 | 1.30 | 90.0 |
| 9-2 | 2 | 1.44 | 89.0 |
| 9-3 | 3 | 1.40 | 90.0 |
| 9-4 | 4 | 1.50 | 87.0 |
| 9-5 | 5 | 1.70 | 89.0 |
| 9-6 | 6 | 1.65 | 86.0 |
| 9-7 | 7 | 1.70 | 85.0 |
| 9-8 | 8 | 1.88 | 88.0 |
| 9-9 | 9 | 1.70 | 87.0 |
| 9-10 | 10 | 1.90 | 87.0 |
| 9-11 | 11 | 2.10 | 81.0 |
| 9-12 | 12 | 2.20 | 80.0 |
| 9-13 | 13 | 1.98 | 82.0 |
| 9-14 | 14 | 1.88 | 83.0 |
| 9-15 | 15 | 1.90 | 83.0 |

- continued -

- continued -

| Stain-removable property | | Anti-haze property | Dewing-preventing property | |
|---|---|---|---|---|
| Appearance | Difference in average lightness | | Degree of dewing on inner surface | Spray wettability |
| ◎ | 0.35 | ◎ | ◎ | ◎ |
| ◎ | 0.16 | ◎ | ◎ | ◎ |
| ◎ | 0.12 | ◎ | ◎ | ◎ |
| ◎ | 0.17 | ◎ | ◎ | ◎ |
| ◎ | 0.23 | ◎ | ◎ | ◎ |
| ◎ | 0.10 | ◎ | ◎ | ◎ |
| ◎ | 0.34 | ◎ | ◎ | ◎ |
| ◎ | 0.21 | ◎ | ◎ | ◎ |
| ◎ | 0.22 | ◎ | ◎ | ◎ |
| ◎ | 0.44 | ◎ | ◎ | ◎ |
| ◎ | 0.11 | ◎ | ◎ | ◎ |
| ◎ | 0.33 | ◎ | ◎ | ◎ |
| ◎ | 0.56 | ◎ | ◎ | ◎ |
| ◎ | 0.33 | ◎ | ◎ | ◎ |
| ◎ | 0.34 | ◎ | ◎ | ◎ |

- continued -

- continued -

| Experiment No. | Hydrophilizing coating composition | Stain-proofing property | |
|---|---|---|---|
| | | Difference in average lightness | Total light transmittance (%) |
| 9-16 | un-coated | 13.20 | 53.0 |
| 9-17 | Comparative coating composition 2 | 7.80 | 61.0 |
| 9-18 | Comparative coating composition 3 | 6.80 | 62.0 |
| 9-19 | Comparative coating composition 4 | 7.20 | 65.0 |
| 9-20 | Comparative coating composition 5 | 7.30 | 64.0 |
| 9-21 | PVdF is adhered | 6.40 | 65.0 |

- continued -

- continued -

| Stain-removable property | | Anti-haze property | Dewing-preventing property | |
|---|---|---|---|---|
| Appearance | Difference in average lightness | | Degree of dewing on inner surface | Spray wettability |
| × | 0.24 | × | × | × |
| △ | 2.76 | × | × | × |
| △ | 2.30 | × | × | × |
| △ | 2.56 | ○ | △ | △ |
| △ | 2.26 | ○ | △ | △ |
| △ | 3.57 | △ | × | × |

EXAMPLE 10

The same procedures as in Example 9 were repeated except that as a plastic substrate, a ETFE film surface-treated by corona-discharging (NEOFLON ETFE Film EF 0103C available from DAIKIN INDUSTRIES, LTD., thickness 100 μm) was used, to give a surface-hydrophilizing film. A simple agricultural house was set by using the obtained film to evaluate stain-proofing property, stain-removable property, anti-haze property and dewing-preventing property in the same manner as in Example 9. The results are shown in Table 14.

In Experiment No. 10-21, a film produced by laminating a polyvinyl fluoride film (TEDORA available from du Pont, thickness: 25 μm) to the above-mentioned substrate film with an epoxy adhesive was used.

TABLE 14

| Experiment No. | Hydrophilizing coating composition | Stain-proofing property | |
|---|---|---|---|
| | | Difference in average lightness | Total light transmittance (%) |
| 10-1 | 1 | 1.40 | 91.0 |
| 10-2 | 2 | 1.44 | 89.0 |
| 10-3 | 3 | 1.40 | 88.0 |
| 10-4 | 4 | 1.56 | 87.0 |
| 10-5 | 5 | 1.70 | 87.0 |
| 10-6 | 6 | 1.65 | 86.0 |
| 10-7 | 7 | 1.67 | 84.0 |
| 10-8 | 8 | 1.88 | 88.0 |
| 10-9 | 9 | 1.67 | 89.0 |
| 10-10 | 10 | 2.00 | 85.0 |
| 10-11 | 11 | 2.10 | 81.0 |
| 10-12 | 12 | 2.20 | 80.0 |
| 10-13 | 13 | 1.98 | 82.0 |
| 10-14 | 14 | 1.89 | 86.0 |
| 10-15 | 15 | 1.90 | 83.0 |

- continued -

- continued -

| Stain-removable property | | Anti-haze property | Dewing-preventing property | |
|---|---|---|---|---|
| Appearance | Difference in average lightness | | Degree of dewing on inner surface | Spray wettability |
| ◎ | 0.37 | ◎ | ◎ | ◎ |
| ◎ | 0.16 | ◎ | ◎ | ◎ |
| ◎ | 0.34 | ◎ | ◎ | ◎ |
| ◎ | 0.20 | ◎ | ◎ | ◎ |
| ◎ | 0.23 | ◎ | ◎ | ◎ |
| ◎ | 0.40 | ◎ | ◎ | ◎ |
| ◎ | 0.34 | ◎ | ◎ | ◎ |
| ◎ | 0.35 | ◎ | ◎ | ◎ |
| ◎ | 0.29 | ◎ | ◎ | ◎ |
| ◎ | 0.44 | ◎ | ◎ | ◎ |
| ◎ | 0.30 | ◎ | ◎ | ◎ |
| ◎ | 0.33 | ◎ | ◎ | ◎ |
| ◎ | 0.36 | ◎ | ◎ | ◎ |
| ◎ | 0.40 | ◎ | ◎ | ◎ |
| ◎ | 0.34 | ◎ | ◎ | ◎ |

- continued -

- continued -

| Experiment No. | Hydrophilizing coating composition | Stain-proofing property | |
|---|---|---|---|
| | | Difference in average lightness | Total light transmittance (%) |
| 10-16 | un-coated | 9.80 | 54.0 |
| 10-17 | Comparative coating composition 2 | 7.00 | 60.0 |
| 10-18 | Comparative coating composition 3 | 7.00 | 61.0 |
| 10-19 | Comparative coating composition 4 | 7.20 | 66.0 |
| 10-20 | Comparative coating composition 5 | 7.50 | 67.0 |
| 10-21 | PVdF is adhered | 6.60 | 64.0 |

- continued -

- continued -

| Stain-removable property | | Anti-haze property | Dewing-preventing property | |
| --- | --- | --- | --- | --- |
| Appearance | Difference in average lightness | | Degree of dewing on inner surface | Spray wettability |
| × | 0.45 | △ | × | × |
| △ | 2.23 | × | × | × |
| △ | 2.30 | × | × | × |
| △ | 2.33 | □ | △ | △ |
| △ | 2.56 | □ | △ | △ |
| △ | 3.80 | △ | × | × |

EXAMPLE 11

The same procedures as in Example 9 were repeated except that as a plastic substrate, a polyester film for outdoor use (TETORON OHW available from TEIJIN, LTD., thickness 150 μm) was used, to give a surface-hydrophilizing film. A simple agricultural house was set by using the obtained film to evaluate stain-proofing property, stain-removable property, anti-haze property and dewing-preventing property in the same manner as in Example 9. The results are shown in Table 15.
In Experiment No. 11-21, a film produced by laminating a polyvinyl fluoride film (TEDORA available from du Pont, thickness: 25 μm) to the above-mentioned substrate film with an epoxy adhesive was used.

TABLE 15

| Experiment No. | Hydrophilizing coating composition | Stain-proofing property | |
|---|---|---|---|
| | | Difference in average lightness | Total light transmittance (%) |
| 11-1 | 1 | 1.30 | 90.0 |
| 11-2 | 2 | 1.44 | 8.7 |
| 11-3 | 3 | 1.42 | 90.0 |
| 11-4 | 4 | 1.50 | 88.0 |
| 11-5 | 5 | 1.67 | 89.0 |
| 11-6 | 6 | 1.65 | 87.0 |
| 11-7 | 7 | 1.70 | 86.0 |
| 11-8 | 8 | 1.90 | 88.0 |
| 11-9 | 9 | 1.70 | 88.0 |
| 11-10 | 10 | 1.96 | 87.0 |
| 11-11 | 11 | 2.30 | 82.0 |
| 11-12 | 12 | 2.20 | 80.0 |
| 11-13 | 13 | 1.98 | 81.0 |
| 11-14 | 14 | 1.88 | 82.0 |
| 11-15 | 15 | 1.90 | 83.0 |

- continued -

- continued -

| Stain-removable property | | Anti-haze property | Dewing-preventing property | |
|---|---|---|---|---|
| Appearance | Difference in average lightness | | Degree of dewing on inner surface | Spray wettability |
| ◎ | 0.33 | ◎ | ◎ | ◎ |
| ◎ | 0.35 | ◎ | ◎ | ◎ |
| ◎ | 0.12 | ◎ | ◎ | ◎ |
| ◎ | 0.45 | ◎ | ◎ | ◎ |
| ◎ | 0.23 | ◎ | ◎ | ◎ |
| ◎ | 0.10 | ◎ | ◎ | ◎ |
| ◎ | 0.34 | ◎ | ◎ | ◎ |
| ◎ | 0.21 | ◎ | ◎ | ◎ |
| ◎ | 0.22 | ◎ | ◎ | ◎ |
| ◎ | 0.55 | ◎ | ◎ | ◎ |
| ◎ | 0.56 | ◎ | ◎ | ◎ |
| ◎ | 0.33 | ◎ | ◎ | ◎ |
| ◎ | 0.56 | ◎ | ◎ | ◎ |
| ◎ | 0.40 | ◎ | ◎ | ◎ |
| ◎ | 0.34 | ◎ | ◎ | ◎ |

- continued -

- continued -

| Experiment No. | Hydrophilizing coating composition | Stain-proofing property | |
|---|---|---|---|
| | | Difference in average lightness | Total light transmittance (%) |
| 11-16 | un-coated | 11.50 | 55.0 |
| 11-17 | Comparative coating composition 2 | 7.60 | 62.0 |
| 11-18 | Comparative coating composition 3 | 6.80 | 60.0 |
| 11-19 | Comparative coating composition 4 | 7.00 | 65.0 |
| 11-20 | Comparative coating composition 5 | 7.00 | 63.0 |
| 11-21 | PVdF is adhered | 6.30 | 65.0 |

- continued -

- continued -

| Stain-removable property | | Anti-haze property | Dewing-preventing property | |
|---|---|---|---|---|
| Appearance | Difference in average lightness | | Degree of dewing on inner surface | Spray wettability |
| × | 7.80 | × | × | × |
| △ | 2.80 | × | × | × |
| △ | 2.67 | × | × | × |
| △ | 3.00 | □ | △ | △ |
| △ | 2.54 | □ | △ | △ |
| △ | 3.67 | □ | × | × |

EXAMPLE 12

The same procedures as in Example 9 were repeated except that as a plastic substrate, a polyvinyl chloride film for agriculture (NOBIACE available from Mitsubishi Kasei Vinyl Kabushiki Kaisha, thickness 100 μm) was used, to give a surface-hydrophilizing film. A simple agricultural house was set by using the obtained film to evaluate stain-proofing property, stain-removable property, anti-haze property and dewing-preventing property in the same manner as in Example 9. The results are shown in Table 16.

In Experiment No. 12-21, a film produced by laminating a polyvinyl fluoride film (TEDORA available from du Pont, thickness: 25 μm) to the above-mentioned substrate film with an epoxy adhesive was used.

TABLE 16

| Experiment No. | Hydrophilizing coating composition | Stain-proofing property | |
|---|---|---|---|
| | | Difference in average lightness | Total light transmittance (%) |
| 12-1 | 1 | 1.45 | 90.0 |
| 12-2 | 2 | 1.44 | 89.0 |
| 12-3 | 3 | 1.50 | 90.0 |
| 12-4 | 4 | 1.50 | 87.0 |
| 12-5 | 5 | 1.67 | 89.0 |
| 12-6 | 6 | 1.65 | 86.0 |
| 12-7 | 7 | 1.69 | 85.0 |
| 12-8 | 8 | 1.88 | 88.0 |
| 12-9 | 9 | 1.70 | 87.0 |
| 12-10 | 10 | 2.00 | 87.0 |
| 12-11 | 11 | 2.10 | 81.0 |
| 12-12 | 12 | 2.30 | 80.0 |
| 12-13 | 13 | 2.00 | 82.0 |
| 12-14 | 14 | 1.90 | 83.0 |
| 12-15 | 15 | 1.90 | 83.0 |

- continued -

- continued -

| Stain-removable property | | Anti-haze property | Dewing-preventing property | |
|---|---|---|---|---|
| Appearance | Difference in average lightness | | Degree of dewing on inner surface | Spray wettability |
| ◎ | 0.33 | ◎ | ◎ | ◎ |
| ◎ | 0.16 | ◎ | ◎ | ◎ |
| ◎ | 0.30 | ◎ | ◎ | ◎ |
| ◎ | 0.17 | ◎ | ◎ | ◎ |
| ◎ | 0.29 | ◎ | ◎ | ◎ |
| ◎ | 0.40 | ◎ | ◎ | ◎ |
| ◎ | 0.34 | ◎ | ◎ | ◎ |
| ◎ | 0.45 | ◎ | ◎ | ◎ |
| ◎ | 0.61 | ◎ | ◎ | ◎ |
| ◎ | 0.44 | ◎ | ◎ | ◎ |
| ◎ | 0.33 | ◎ | ◎ | ◎ |
| ◎ | 0.33 | ◎ | ◎ | ◎ |
| ◎ | 0.56 | ◎ | ◎ | ◎ |
| ◎ | 0.33 | ◎ | ◎ | ◎ |
| ◎ | 0.34 | ◎ | ◎ | ◎ |

- continued -

- continued -

| Experiment No. | Hydrophilizing composition | Stain-proofing property | |
|---|---|---|---|
| | | Difference in average lightness | Total light transmittance (%) |
| 12-16 | un-coated | 14.00 | 40.0 |
| 12-17 | Comparative coating composition 2 | 7.00 | 63.0 |
| 12-18 | Comparative coating composition 3 | 6.80 | 63.0 |
| 12-19 | Comparative coating composition 4 | 7.20 | 65.0 |
| 12-20 | Comparative coating composition 5 | 7.30 | 64.0 |
| 12-21 | PVdF is adhered | 6.50 | 65.0 |

- continued -

- continued -

| Stain-removable property | | Anti-haze property | Dewing-preventing property | |
|---|---|---|---|---|
| Appearance | Difference in average lightness | | Degree of dewing on inner surface | Spray wettability |
| × | 11.00 | △ | × | × |
| △ | 2.87 | × | × | × |
| △ | 2.50 | × | × | × |
| △ | 2.56 | △ | △ | △ |
| △ | 2.70 | △ | △ | △ |
| △ | 3.65 | × | × | × |

EXAMPLE 13

The same procedures as in Example 9 were repeated except that as a plastic substrate, a soft polyvinyl chloride film for agriculture (CLEANACE available from Mitsubishi Kasei Vinyl Kabushiki Kaisha, thickness 100 µm) which had been subjected to anti-haze treatment was used, to give a surface-hydrophilizing film. A simple agricultural house was set by using the obtained film to evaluate stain-proofing property, stain-removable property, anti-haze property and dewing-preventing property in the same manner as in Example 9. The results are shown in Table 17.

In Experiment No. 13-21, a film produced by laminating a polyvinyl fluoride film (TEDORA available from du Pont, thickness: 25 µm) to the above-mentioned substrate film with an epoxy adhesive was used.

TABLE 17

| Experiment No. | Hydrophilizing coating composition | Stain-proofing property | |
|---|---|---|---|
| | | Difference in average lightness | Total light transmittance (%) |
| 13-1 | 1 | 1.36 | 90.0 |
| 13-2 | 2 | 1.44 | 89.0 |
| 13-3 | 3 | 1.46 | 90.0 |
| 13-4 | 4 | 1.50 | 87.0 |
| 13-5 | 5 | 1.55 | 89.0 |
| 13-6 | 6 | 1.65 | 86.0 |
| 13-7 | 7 | 1.70 | 85.0 |
| 13-8 | 8 | 1.79 | 88.0 |
| 13-9 | 9 | 1.70 | 87.0 |
| 13-10 | 10 | 2.00 | 87.0 |
| 13-11 | 11 | 2.10 | 81.0 |
| 13-12 | 12 | 2.00 | 80.0 |
| 13-13 | 13 | 1.89 | 82.0 |
| 13-14 | 14 | 1.88 | 83.0 |
| 13-15 | 15 | 1.88 | 83.0 |

- continued -

- continued -

| Stain-removable property | | Anti-haze property | Dewing-preventing property | |
|---|---|---|---|---|
| Appearance | Difference in average lightness | | Degree of dewing on inner surface | Spray wettability |
| ◎ | 0.34 | ◎ | ◎ | ◎ |
| ◎ | 0.16 | ◎ | ◎ | ◎ |
| ◎ | 0.43 | ◎ | ◎ | ◎ |
| ◎ | 0.29 | ◎ | ◎ | ◎ |
| ◎ | 0.23 | ◎ | ◎ | ◎ |
| ◎ | 0.55 | ◎ | ◎ | ◎ |
| ◎ | 0.34 | ◎ | ◎ | ◎ |
| ◎ | 0.67 | ◎ | ◎ | ◎ |
| ◎ | 0.39 | ◎ | ◎ | ◎ |
| ◎ | 0.69 | ◎ | ◎ | ◎ |
| ◎ | 0.89 | ◎ | ◎ | ◎ |
| ◎ | 0.57 | ◎ | ◎ | ◎ |
| ◎ | 0.56 | ◎ | ◎ | ◎ |
| ◎ | 0.61 | ◎ | ◎ | ◎ |
| ◎ | 0.58 | ◎ | ◎ | ◎ |

- continued -

- continued -

| Experiment No. | Hydrophilizing coating composition | Stain-proofing property | |
|---|---|---|---|
| | | Difference in average lightness | Total light transmittance (%) |
| 13-16 | un-coated | 10.00 | 67.0 |
| 13-17 | Comparative coating composition 2 | 7.70 | 65.0 |
| 13-18 | Comparative coating composition 3 | 7.60 | 62.0 |
| 13-19 | Comparative coating composition 4 | 7.20 | 65.0 |
| 13-20 | Comparative coating composition 5 | 7.30 | 63.0 |
| 13-21 | PVdF is adhered | 6.70 | 63.0 |

- continued -

- continued -

| Stain-removable property | | Anti-haze property | Dewing-preventing property | |
|---|---|---|---|---|
| Appearance | Difference in average lightness | | Degree of dewing on inner surface | Spray wettability |
| × | 4.60 | ○ | ○ | ○ |
| △ | 2.80 | □ | × | × |
| △ | 2.78 | □ | × | × |
| △ | 2.60 | □ | △ | △ |
| △ | 2.50 | □ | △ | △ |
| △ | 3.60 | △ | × | × |

EXAMPLE 14

The same procedures as in Example 9 were repeated except that as a plastic substrate, a polyolefin film for agriculture (SUPERSOLAR available from Mikado Kako Kabushiki Kaisha, thickness 150 μm) was used, to give a surface-hydrophilizing film. A simple agricultural house was set by using the obtained film to evaluate stain-proofing property, stain-removable property, anti-haze property and dewing-preventing property in the same manner as in Example 9. The results are shown in Table 18.

In Experiment No. 14-21, a film produced by laminating a polyvinyl fluoride film (TEDORA available from du Pont, thickness: 25 μm) to the above-mentioned substrate film with an epoxy adhesive was used.

TABLE 18

| Experiment No. | Hydrophilizing coating composition | Stain-proofing property | |
|---|---|---|---|
| | | Difference in average lightness | Total light transmittance (%) |
| 14-1 | 1 | 1.38 | 89.0 |
| 14-2 | 2 | 1.44 | 89.0 |
| 14-3 | 3 | 1.46 | 90.0 |
| 14-4 | 4 | 1.45 | 88.0 |
| 14-5 | 5 | 1.55 | 89.0 |
| 14-6 | 6 | 1.65 | 87.0 |
| 14-7 | 7 | 1.36 | 86.0 |
| 14-8 | 8 | 1.70 | 88.0 |
| 14-9 | 9 | 1.76 | 87.0 |
| 14-10 | 10 | 1.90 | 88.0 |
| 14-11 | 11 | 2.10 | 81.0 |
| 14-12 | 12 | 2.30 | 82.0 |
| 14-13 | 13 | 1.90 | 82.0 |
| 14-14 | 14 | 1.88 | 84.0 |
| 14-15 | 15 | 1.90 | 83.0 |

- continued -

- continued -

| Stain-removable property | | Anti-haze property | Dewing-preventing property | |
|---|---|---|---|---|
| Appearance | Difference in average lightness | | Degree of dewing on inner surface | Spray wettability |
| ◎ | 0.40 | ◎ | ◎ | ◎ |
| ◎ | 0.30 | ◎ | ◎ | ◎ |
| ◎ | 0.43 | ◎ | ◎ | ◎ |
| ◎ | 0.30 | ◎ | ◎ | ◎ |
| ◎ | 0.34 | ◎ | ◎ | ◎ |
| ◎ | 0.55 | ◎ | ◎ | ◎ |
| ◎ | 0.34 | ◎ | ◎ | ◎ |
| ◎ | 0.66 | ◎ | ◎ | ◎ |
| ◎ | 0.66 | ◎ | ◎ | ◎ |
| ◎ | 0.69 | ◎ | ◎ | ◎ |
| ◎ | 0.75 | ◎ | ◎ | ◎ |
| ◎ | 0.57 | ◎ | ◎ | ◎ |
| ◎ | 0.60 | ◎ | ◎ | ◎ |
| ◎ | 0.61 | ◎ | ◎ | ◎ |
| ◎ | 0.60 | ◎ | ◎ | ◎ |

- continued -

- continued -

| Experiment No. | Hydrophilizing coating composition | Stain-proofing property | |
|---|---|---|---|
| | | Difference in average lightness | Total light transmittance (%) |
| 14-16 | un-coated | 13.00 | 58.0 |
| 14-17 | Comparative coating composition 2 | 7.76 | 66.0 |
| 14-18 | Comparative coating composition 3 | 7.80 | 63.0 |
| 14-19 | Comparative coating composition 4 | 7.20 | 65.0 |
| 14-20 | Comparative coating composition 5 | 7.40 | 63.0 |
| 14-21 | PVdF is adhered | 6.50 | 64.0 |

- continued -

- continued -

| Stain-removable property | | Anti-haze property | Dewing-preventing property | |
|---|---|---|---|---|
| Appearance | Difference in average lightness | | Degree of dewing on inner surface | Spray wettability |
| × | 7.80 | △ | ○ | ○ |
| △ | 2.67 | × | × | × |
| △ | 2.65 | × | × | × |
| △ | 2.50 | △ | △ | △ |
| △ | 2.75 | △ | △ | △ |
| △ | 3.70 | △ | × | × |

EXAMPLE 15

One surface of a soft polyvinyl chloride film (NOBIACE available from Mitsubishi Kasei Vinyl Kabushiki Kaisha, thickness: 100 μm) was coated with a hydrophilizing coating composition shown in Table 4 by using a bar coater and dried at room temperature for two days. The obtained molded film was set on an exposure rack placed at an angle of 30° being faced toward southern direction on a roof of 3-storied building in Osaka Prefecture, and exposed outdoor. Seven days and 24 months after starting of an exposure test, a surface resistance was measured (surface resistance meter HT-210 available from Mitsubishi Yuka Kabushiki Kaisha, upper measuring limit: $10^{12}$). The results are shown in Table 19.

In Experiment No. 15-21, a film produced by laminating a polyvinyl fluoride film (TEDORA available from du Pont, thickness: 25 μm) to the above-mentioned substrate film with an epoxy adhesive was used.

TABLE 19

| Experiment No. | Hydrophilizing coating composition | Surface resistance (Ω) | |
|---|---|---|---|
| | | 7 days after exposure | 24 months after exposure |
| 15-1 | 1 | $1.60 \times 10^{10}$ | $157 \times 10^{10}$ |
| 15-2 | 2 | $2.01 \times 10^{10}$ | $2.21 \times 10^{10}$ |
| 15-3 | 3 | $1.53 \times 10^{10}$ | $1.60 \times 10^{10}$ |
| 15-4 | 4 | $2.20 \times 10^{10}$ | $2.24 \times 10^{10}$ |
| 15-5 | 5 | $1.98 \times 10^{10}$ | $1.95 \times 10^{10}$ |
| 15-6 | 6 | $1.52 \times 10^{10}$ | $1.67 \times 10^{10}$ |
| 15-7 | 7 | $1.74 \times 10^{10}$ | $1.79 \times 10^{10}$ |
| 15-8 | 8 | $1.62 \times 10^{10}$ | $1.52 \times 10^{10}$ |
| 15-9 | 9 | $1.88 \times 10^{10}$ | $1.99 \times 10^{10}$ |
| 15-10 | 10 | $1.77 \times 10^{10}$ | $2.30 \times 10^{10}$ |
| 15-11 | 11 | $2.20 \times 10^{10}$ | $2.26 \times 10^{10}$ |
| 15-12 | 12 | $3.23 \times 10^{10}$ | $3.30 \times 10^{10}$ |
| 15-13 | 13 | $3.10 \times 10^{10}$ | $3.19 \times 10^{10}$ |
| 15-14 | 14 | $2.28 \times 10^{10}$ | $2.33 \times 10^{10}$ |
| 15-15 | 15 | $1.56 \times 10^{10}$ | $1.66 \times 10^{10}$ |
| 9-16 | un-coated | Surface resistance could not be measured because it exceeded measurable upper limit. | |
| 9-17 | Comparative coating composition 2 | | |
| 9-18 | Comparative coating composition 3 | | |
| 9-19 | Comparative coating composition 4 | | |
| 9-20 | Comparative coating composition 5 | | |
| 9-21 | PVdF is adhered | | |

According to the present invention, a plastic molded article being excellent in stain-removable property, water-draining property, anti-haze property, dewing-preventing property, and-static property and biocompatibility can be provided.

**Claims**

1. A plastic molded article having a coating film of hydrophilizing coating composition containing an organometallic compound having a hydrolyzable leaving group, its oligomer and/or cooligomer comprising two or more of the organometallic compounds on at least one outermost layer of a plastic substrate.

2. The molded article of Claim 1, wherein said organometallic compound is an organometallic compound represented by the formula (1):

$$X_bM(OR^1)_aR^2_c \quad (1)$$

wherein a is 0 or an integer of 1 to 6, b is 0 or an integer of 1 to 5, c is 0 or an integer of 1 to 6, provided that $a+b+c \geqq 3$ and a and c are not zero at the same time, X are the same or different and each is hydrogen atom or an organic group which has 1 to 5,000 carbon atoms and may contain oxygen atom, nitrogen atom, fluorine atom and/or chlorine atom, M is a metal atom having at least three valences, $R^1$ are the same or different and each is siloxane residue, hydrogen atom or an organic group which has 1 to 1,000 carbon atoms and may contain oxygen atom, nitrogen atom, fluorine atom and/or chlorine atom, $R^2$ are the same or different and each is an organic group which has 1 to 20 carbon atoms, has a chelating ability and may contain oxygen atom, nitrogen atom, fluorine atom and/or chlorine atom.

3. The molded article of Claim 1 or 2, wherein said plastic substrate is in the form of film, sheet, board or tube.

4. The molded article of any of Claims 1 to 3, wherein said plastic substrate is made of polyethylene, polypropylene, polystyrene, ethylene/vinyl acetate copolymer, polyvinyl chloride, a resin mixture of polyvinylidene fluoride/polyvinyl chloride, polyvinyl alcohol, polytetrafluoroethylene, tetrafluoroethylene / hexafluoropropylene copolymer, tetrafluoroethylene/perfluoro(alkyl vinyl ether) copolymer, ethylene/tetrafluoroethylene copolymer, ethylene / chlorotrifluoroethylene copolmer, polychlorotrifluoroethylene, polyvinylidene fluoride, polyvinyl fluoride, polycarbonate, cellulose acetate, cellulose triacetate, polyester, polyethylene naphthalate, polyvinyl butyral, polyamide 6, polyamide 12, wholly aromatic polyamide, polyimide, polyamideimide, polysulfone, polyether sulfone, polyphenylene sulfide, polyarylate, polyether ether ketone or polyetherimide.

5. The molded article of any of Claims 2 to 4, wherein at least one of $R^1$ and $R^2$ of said organometallic compound represented by the formula (1) is a fluorine-containing group.

6. The molded article of any of Claims 1 to 5, wherein said surface-hydrophilizing coating composition contains the organometallic compound, a resin for paint and an ultraviolet ray absorber.

7. The molded article of any of Claims 1 to 5, wherein said surface-hydrophilizing coating composition contains the organometallic compound, a resin for paint and a silane coupling agent.

8. The molded article of any of Claims 1 to 5, wherein said surface-hydrophilizing coating composition contains the organometallic compound, a resin for paint and a hydrolyzing catalyst for hydrophilization.

9. The molded article of any of Claims 1 to 8, wherein a coating film of said hydrophilizing coating composition is subjected to hydrophilization accelerating treatment.

10. The molded article of any of Claims 1 to 9, wherein an adhesive layer is provided on a plastic substrate surface where the coating film of the above-mentioned hydrophilizing coating composition is not formed.

11. A method of producing a plastic molded article subjected to hydrophilization by coating a plastic substrate with a hydrophilizing coating composition containing an organometallic compound having a hydrolyzable leaving group, its oligomer and/or cooligomer comprising two or more of the organometallic compounds.

12. The method of production of Claim 11, wherein said organometallic compound is an organometallic compound represented by the formula (1):

$$X_bM(OR^1)_aR^2_c \quad (1)$$

wherein a is 0 or an integer of 1 to 6, b is 0 or an integer of 1 to 5, c is 0 or an integer of 1 to 6, provided that $a+b+c \geqq 3$ and a and c are not zero at the same time, X are the same or different and each is hydrogen atom or an organic group which has 1 to 5,000 carbon atoms and may contain oxygen atom, nitrogen atom, fluorine atom and/or chlorine atom, M is a metal atom having at least three valences, $R^1$ are the same or different and each is siloxane residue, hydrogen atom or an organic group which has 1 to 1,000 carbon atoms and may contain oxygen atom, nitrogen atom, fluorine atom and/or chlorine atom, $R^2$ are the same or different and each is an organic group

which has 1 to 20 carbon atoms, has a chelating ability and may contain oxygen atom, nitrogen atom, fluorine atom and/or chlorine atom.

**13.** The method of production of Claim 11 or 12, wherein said plastic substrate is in the form of film, sheet, board or tube.

**14.** The method of production of any of Claims 11 to 13, wherein said plastic substrate is made of polyethylene, polypropylene, polystyrene, ethylene/vinyl acetate copolymer, polyvinyl chloride, a resin mixture of polyvinylidene fluoride/polyvinyl chloride, polyvinyl alcohol, polytetrafluoroethylene, tetrafluoroethylene/hexafluoropropylene copolymer, tetrafluoroethylene/perfluoro(alkyl vinyl ether) copolymer, ethylene/tetrafluoroethylene copolymer, ethylene / chlorotrifluoroethylene copolmer, polychlorotrifluoroethylene, polyvinylidene fluoride, polyvinyl fluoride, polycarbonate, cellulose acetate, cellulose triacetate, polyester, polyethylene naphthalate, polyvinyl butyral, polyamide 6, polyamide 12, wholly aromatic polyamide, polyimide, polyamideimide, polysulfone, polyether sulfone, polyphenylene sulfide, polyarylate, polyether ether ketone or polyetherimide.

**15.** The method of production of any of Claims 11 to 13, wherein said plastic substrate is surface-treated before coating.

**16.** The method of production of Claim 15, wherein said surface treatment is at least one of corona discharge treatment, plasma treatment, sputtering or excimer laser treatment

**17.** The method of production of Claim 15, wherein said surface treatment is conducted by forming a primer.

**18.** The method of production of any of Claims 11 to 17, wherein a surface of the coating film is subjected to hydrophilization accelerating treatment after coating on the plastic substrate.

**19.** The method of production of any of Claims 11 to 18, wherein coating on the plastic substrate is carried out by using said hydrophilizing coating composition in an aerosol can.

**20.** An article having biocompatibility which is made of the plastic molded article of any of Claims 1 to 10.

**21.** An article having stain-removable property which is made of the plastic molded article of any of Claims 1 to 10.

**22.** An article having anti-haze property which is made of the plastic molded article of any of Claims 1 to 10.

**23.** An article having anti-static property which is made of the plastic molded article of any of Claims 1 to 10.

**24.** An article having water-draining property which is made of the plastic molded article of any of Claims 1 to 10.

**25.** An article having dewing-preventing property which is made of the plastic molded article of any of Claims 1 to 10.

**26.** A film or sheet for agriculture which is made of the plastic molded article of any of Claims 1 to 10 in the form of film or sheet.

**27.** A film or sheet for covering solar cell which is made of the plastic molded article of any of Claims 1 to 10 in the form of film or sheet.

**28.** A film or sheet for outdoor use which is made of the plastic molded article of any of Claims 1 to 10 in the form of film or sheet.

**29.** A cloth for tent which is produced by adhering the film or sheet for outdoor use of Claim 28 thereto.

**30.** A film or sheet for building material which is made of the plastic molded article of any of Claims 1 to 10 in the form of film or sheet.

**31.** A protection cloth for building which is produced by adhering the film or sheet for building material of Claim 28 thereto.